# EUROPÄISCHE PATENTSCHRIFT

(11) **EP 3 415 950 B1**
(45) Veröffentlichungstag und Bekanntmachung des Hinweises auf die Patenterteilung: **27.05.2020**
(21) Anmeldenummer: 17175868.3
(22) Anmeldetag: 13.06.2017
(51) Int. Cl.: G01S 17/10, G01S 7/4865

(54) **DISTANZMESSER MIT SPAD-ANORDNUNG UND RANGE WALK KOMPENSATION**
RANGE FINDER USING SPAD ASSEMBLY AND RANGE WALK COMPENSATION
DISPOSITIF DE MESURE DE DISTANCE COMPRENANT UN SYSTÈME SPAD ET COMPENSATION DE RANGE WALK

(43) Veröffentlichungstag der Anmeldung: 19.12.2018
(73) Patentinhaber: Hexagon Technology Center GmbH, 9435 Heerbrugg (CH)
(72) Erfinder: HINDERLING, Jürg, CH-9437 Marbach (CH); BESTLER, Simon, D-88085 Langenargen (DE); PIOK, Thomas, A-6842 Koblach (AT); WALSER, Andreas, CH-9000 St.Gallen (CH); WOHLGENANNT, Rainer, A-6833 Klaus (AT)
(74) Vertreter: Kaminski Harmann

(56) Entgegenhaltungen:
- EP-A1- 3 098 626
- EP-A1- 3 206 045
- WO-A1-2008/009387
- US-A1- 2015 338 270

## Beschreibung

Die Erfindung bezieht sich auf einen Distanzmesser zur hochgenauen Distanzmessung mit sehr hohem Dynamikbereich und Range Walk Kompensation.

Der erfindungsgemässe optoelektronische Distanzmesser ist beispielsweise geeignet für Distanz- und Koordinatenmessgeräte in den Bereichen Geodäsie und Industrievermessung, wo typischerweise LIDAR, Lasertracker, Tachymeter, Laserscanner, oder Profiler eingesetzt werden.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel beispielsweise anhand der Laufzeit, der Form, und/oder der Phase des Pulses bestimmt werden kann. Solche Laserdistanzmesser haben sich mittlerweile in vielen Bereichen als Standardlösungen durchgesetzt.

Zur Detektion des zurückgestreuten Pulses einer zurückgestreuten Pulsfolge werden zumeist zwei unterschiedliche Ansätze oder eine Kombination daraus verwendet.

Bei der so genannten Schwellwertmethode wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Problematisch ist jedoch, dass bei schwachen rückgestreuten Pulsen, wie sie beispielsweise durch grössere Messdistanzen bedingt werden, eine Detektion nicht mehr möglich ist, wenn die Pulsintensität unter die Detektionsschwelle, d.h. unter den Schwellwert, fällt. Der wesentliche Nachteil dieser Schwellwertmethode liegt somit darin, dass die Amplitude des Messsignals hinreichend grösser als die Rauschamplitude von optischen und elektrischen Rauschquellen im Signalweg sein muss, um Fehldetektionen hinreichend zu minimieren, sodass für Messungen bei relativ grossen Distanzen die Schwellwertmethode nur bedingt einsatztauglich ist.

Der andere Ansatz basiert auf der Abtastung bzw. dem Sampling des rückgestreuten Pulses. Dieser Ansatz wird typischerweise bei schwachen rückgestreuten Signalen (z.B. Pulssignale) verwendet, wie sie beispielsweise durch grössere Messdistanzen bedingt werden. Diese Methode kann auch als ganzheitliche Signalerfassung betrachtet werden, wobei durch das Abtasten sowohl die gesamte Signal- als auch die wesentliche Rauschinformation erfasst werden. Dies führt beispielsweise zu einer Erhöhung der Messgenauigkeit. Ein emittiertes Signal wird detektiert, indem die von einem Detektor erfasste Strahlung abgetastet, innerhalb des abgetasteten Bereichs ein Signal identifiziert und schliesslich eine Lage des Signals zeitlich bestimmt wird. Durch die Verwendung einer Vielzahl von Abtastwerten und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

Heutzutage wird dabei mittels der Wellenformdigitalisierungsmethode ("Waveform Digitizing", WFD) häufig die gesamte Wellenform des analogen Signals der von einem Detektor erfassten Strahlung abgetastet. Nach Identifikation der Codierung des zugehörigen Sendesignals (ASK, FSK, PSK, etc.) eines empfangenen Signals, wird aus einem definierten Verlaufspunkt des abgetasteten, digitalisierten und rekonstruierten Signals, beispielsweise den Wendepunkten, den Kurvenmaxima, oder integral mittels eines aus der Zeitinterpolation bekannten Optimum Filters, sehr genau eine Signallaufzeit ("Pulslaufzeit") bestimmt.

Problematisch ist der limitierte lineare Aussteuerbereich der elektronischen Empfängerschaltung. Im Nahbereich kann das Signal den Empfänger sättigen, so dass die Codierung des Sendesignals nicht mehr richtig ermittelt oder die Laufzeit ungenügend genau bestimmt wird.

Ein prohibitiver Nachteil der Signalabtastung liegt also darin, dass im Zustand einer gesättigten Empfangselektronik durch zu starke empfangene Lichtintensitäten, insbesondere bei kurzen Distanzen oder starker Reflektivität des Zielobjekts, keine angemessen auswertbaren Informationen des Messsignals mehr zur Verfügung stehen, da dann ein tatsächlicher Signalverlauf aufgrund Detektorsättigung nicht mehr feststellbar ist.

Alternativ oder zusätzlich zur Bestimmung der Pulslaufzeit erfolgt eine (schnelle) Abtastung oft auch hinsichtlich in Amplitude, Phase, Polarisation, Wellenlänge und/oder Frequenz codierten oder modulierten Impulsen oder Impulsfolgen.

Zum Beispiel wird beim Ansatz der zeitlich sehr präzisen Abtastung bzw. dem Sampling des zurückgestreuten Signals das vom Detektor erzeugte elektrische Signal mittels eines Analog-Digital-Wandlers ("Analog-Digital-Converter", ADC) in eine digitale Signalfolge umgewandelt. Dieses digitale Signal wird anschliessend meistens in Echtzeit weiter verarbeitet. In einem ersten Schritt wird diese Signalfolge durch spezielle digitale Filter dekodiert, also erkannt und schliesslich die Lage einer ein Zeitintervall beschreibenden Signatur innerhalb der Signalfolge bestimmt. Beispiele für zeitauflösende Signaturen sind Schwerpunkt, Cosinus-Transformation oder beispielsweise amplitudennormierte FIR-Filter ("finite impulse response filter") mit einem von der Pulsform abgeleiteten Gewichtskoeffizientensatz. Um allfällige Distanzdrifts zu eliminieren wird eine entsprechende zeitauflösende Signatur auch von einem internen Startsignal verglichen. Um irreversible Samplingfehler zu vermeiden, werden zusätzliche dem Fachmann bekannte digitale Signal-Transformationen angewendet.

Eine der einfachsten Modulationsarten ist die Kennzeichnung der einzelnen Impulse oder der Pulsfolgen per Abstandscodierung, wie z.B. beschrieben in der EP 1 832 897 B1. Diese wird beispielsweise zu dem Zwecke der Re-Identifizierbarkeit eingesetzt. Diese Wiedererkennung ist dann erforderlich, wenn eine Mehrdeutigkeit entsteht, welche bei der Laufzeitmessung von Impulsen durch unterschiedliche Situationen hervorgerufen werden kann, beispielsweise wenn sich zwischen Vermessungsgerät und Zielobjekt mehr als ein Impuls oder eine Impulsgruppe befindet. Insbesondere vorteilhaft ist die Pulskodierung beispielsweise bei Mehrstrahlsystemen bestehend aus mehreren Laserstrahlen und zugeordneten Empfangssensoren.

Bei der Schwellwertmethode wird zur Bestimmung der Empfangszeit hinter einem Schwellwertdiskriminator ein Zeit-Digital-Konverter (TDC, "time to digital converter") eingesetzt. Mit diesem wird der Zeitpunkt der ansteigenden Flanke des vom Diskriminator erzeugten binären Timing-Signals gemessen, wobei das Timing-Signal beispielsweise basierend auf einem Schwellwert erzeugt wird. Wenn nun der ausgesendete Puls beispielsweise eine Gauss-Form hat, wird der Teil der ansteigenden und absteigenden Flanke welche über dem Schwellwert liegt mit der empfangenen Pulsstärke erhöht. Dies bedeutet also, dass bei einer Zeitmessung basierend auf der ansteigenden Flanke amplitudenabhängige Timing-Fehler auftreten, welche in der Literatur typischerweise als "Range Walk" bezeichnet werden. Um den Range Walk zu kompensieren, muss also beispielsweise eine Amplitudeninformation bezüglich eines empfangenen Pulses bekannt sein.

Eine weitere Ursache des "Range Walk"-Problems hat zu tun mit der hohen Linearität der gebräuchlichen Photodetektoren. Diese übertragen den vollen Dynamikbereich des Empfangssignals auf die Empfangselektronik, wobei letztere jedoch einen sehr begrenzten linearen Aussteuerbereich hat. Dadurch werden also die Transitzeit und damit die zu ermittelnde Lichtlaufzeit verändert. Bei Sättigung der Empfängerelektronik entstehen Pulsverformungen infolge von nichtlinearem Aussteuererhalten. Das Problem liegt darin, dass die Elektronik den weiten Dynamikbereich der gebräuchlichen Photodetektoren nicht bewältigt. Vorteilhaft wäre daher deshalb beispielsweise eine Dynamikkompression bereits im Photodetektor.

Ein Distanzmesser mit SPAD-Anordnung und Range Walk Kompensation gemäß dem Stand der Technik ist in US 2015/0338270 A1 beschrieben. Die Aufgabe der vorliegenden Erfindung besteht in der Bereitstellung eines Distanzmessverfahrens bzw. Distanzmessers, womit die aus dem Stand der Technik bekannten Nachteile vermieden werden, insbesondere wobei schnelle und präzise Messungen, beispielsweise mit Genauigkeiten kleiner als 1 mm, sowohl für kurze als auch für lange Distanzen und auf Objekte mit variierenden Streueigenschaften ermöglicht werden.
Eine weitere Aufgabe der Erfindung ist ferner eine verbesserte hochgenaue Distanzmessung (<1mm) sowohl auf diffus streuende Objekte als auch auf Reflektorziele.
Eine weitere Aufgabe der Erfindung ist eine Verbesserung von hochpräzisen 3D-Scans auf Szenen mit diffus streuenden Oberflächen, teilreflektierenden oder glänzenden Gegenständen, Reflexmarkierungen und Retroreflektoren, insbesondere zur Ermöglichung von Messraten im Megahertzbereich.
Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.
Die Erfindung betrifft einen Distanzmesser, insbesondere zur Verwendung in einem handgehaltenen Distanzmessgerät, Lasertracker, Tachymeter, Laserscanner, LIDAR-Messgerät oder Profiler, für eine Bestimmung einer Distanz zu einem Ziel mit einer Strahlungsquelle zur Erzeugung einer Sendestrahlung, insbesondere gepulste Lasermessstrahlung oder Superlumineszenz-LED-Strahlung, einem Sendepfad zum Aussenden von zumindest einem Teil der Sendestrahlung zum Ziel, einem Empfangspfad mit einem Empfänger der konfiguriert ist zum Erfassen eines Empfangssignals basierend auf zumindest einem Teil der vom Ziel zurückkommenden Sendestrahlung, und einer Recheneinheit die konfiguriert ist zum Ableiten der Distanz zum Ziel basierend auf dem Empfangssignal.

Gemäss der vorliegenden Erfindung weist der Empfänger zum Erfassen des Empfangssignals einen optoelektronischen Sensor basierend auf einer Anordnung von Single Photon Avalanche Photodioden auf, nachfolgend SPAD-Anordnung genannt, und die Recheneinheit ist konfiguriert um basierend auf dem Empfangssignal einen Signaturparameter abzuleiten, wobei dem Signaturparameter eine Information bezüglich einer Signatur des Signalverlaufs des Empfangssignals anhaftet, insbesondere wobei der Signatur eine Information bezüglich einer kennlinienspezifischen Triggerung der Mikrozellen der SPAD-Anordnung anhaftet, wobei auf der Recheneinheit ferner eine Distanzkorrektur-Information, insbesondere als Funktion oder Lookup-Tabelle, hinterlegt ist bezüglich beim Ableiten der Distanz auftretender und vom Signalverlauf des Empfangssignals abhängiger Distanzoffsets, und die Recheneinheit, basierend auf dem abgeleiteten Signaturparameter und der Distanzkorrektur-Information, beim Ableiten der Distanz einen Distanzoffset berücksichtigt.

Insbesondere umfasst der Signaturparameter mindestens eines von folgendem: eine Signalamplitude des Empfangssignals, ein Kurvenmaximum des Empfangssignals, eine Pulsbreite eines durch das Empfangssignal repräsentierten Pulses, eine Pulsform eines durch das Empfangssignal repräsentierten Pulses, insbesondere wobei die Pulsform mittels Spline-Interpolation oder eines Resampling-Algorithmus abgeleitet wird, ein Wendepunkt des Empfangssignals, einen Maximalwert der Steigung des Empfangssignals, und einen Maximalwert der Krümmung des Empfangssignals, beispielsweise wobei der Wendepunkt, die Krümmung und die Steigung jeweils bezüglich der steigenden und/oder der fallenden Flanke erfasst wird, insbesondere wobei die Distanzkorrektur-Information ein beim Ableiten der Distanz auftretender und vom Signalverlauf des Empfangssignals abhängiger Zeitoffset eines Zeitwerts bezüglich eines Empfangszeitpunkts des Empfangssignals ist, welcher beim Ableiten der Distanz dem Signaturparameter funktional gegenüber gestellt wird.

Ein weiterer Aspekt der Erfindung betrifft einen Distanzmesser, insbesondere zur Verwendung in einem handgehaltenen Distanzmessgerät, Lasertracker, Tachymeter, Laserscanner, LIDAR-Messgerät oder Profiler, für eine Bestimmung einer Distanz zu einem Ziel mit einer Strahlungsquelle zur Erzeugung einer Sendestrahlung, insbesondere gepulste Lasermessstrahlung oder Superlumineszenz-LED-Strahlung, einem Sendepfad zum Aussenden von zumindest einem Teil der Sendestrahlung zum Ziel, einem Empfangspfad mit einem Empfänger der konfiguriert ist zum Erfassen eines Empfangssignals basierend auf zumindest einem Teil der vom Ziel zurückkommenden Sendestrahlung, nachfolgend Empfangsstrahlung genannt, und einer Recheneinheit die konfiguriert ist zum Ableiten der Distanz zum Ziel basierend auf dem Empfangssignal.

Gemäss diesem Aspekt der Erfindung weist der Empfänger zum Erfassen des Empfangssignals einen optoelektronischen Sensor basierend auf einer Anordnung von Single Photon Avalanche Photodioden auf, nachfolgend SPAD-Anordnung genannt, wobei die Recheneinheit konfiguriert ist um eine Amplitude des Empfangssignals abzuleiten, insbesondere wobei die Amplitude direkt aus dem Kurvenmaximum des Empfangssignals abgeleitet wird, wobei auf Recheneinheit ferner eine Distanzkorrektur-Information, insbesondere als Funktion oder Lookup-Tabelle, hinterlegt ist bezüglich beim Ableiten der Distanz auftretender und von der Amplitude des Empfangssignals abhängiger Distanzoffsets, und wobei die Recheneinheit, basierend auf der Distanzkorrektur-Information, beim Ableiten der Distanz einen aus der Amplitude des Empfangssignals abgeleiteten Distanzoffset berücksichtigt.

Insbesondere stellt die Distanzkorrektur-Information eine Form-Information bezüglich einer von der Photostromdichte der Empfangsstrahlung abhängigen Signalform des Empfangssignals (14,14') bereit, insbesondere bezüglich einer von der Photostromdichte der Empfangsstrahlung abhängigen zeitlichen Verschiebung eines Kurvenmaximums des Empfangssignals. Zum Beispiel ist die zeitliche Verschiebung ferner abhängig von der Anzahl der Mikrozellen oder genauer vom Verhältnis der Anzahl der auf der SPAD-Anordnung vorhandenen Mikrozellen zur Anzahl der einfallenden Photonen.

Anordnungen von Single Photon Avalanche Photodioden, auch SPAD-Anordnung oder SPAD-Arrays genannt, sind in der Regel als Matrix-Struktur auf einem Chip angeordnet. Die Anordnungen oder Chips mit einer Photoempfindlichkeit im sichtbaren und nahen infrarot Spektralbereich werden auch als SiPM (Silicon Photomultiplier) bezeichnet. Die SiPM lösen allmählich die bisher eingesetzten Photomultiplier Tubes ab, insbesondere im sichtbaren und nahen ultravioletten Spektralbereich. SiPM haben eine hohe spektrale Empfindlichkeit im sichtbaren Wellenlängenbereich. Im Stand der Technik sind beispielsweise SPAD Arrays erhältlich, die bis in den Nahinfrarot-Bereich bis weit über 900 nm Wellenlänge sensitiv sind.

Das Besondere an diesen SPAD-Arrays ist deren hohe Verstärkung, daher werden diese bisher beispielsweise bei sehr schwachen optischen Signalen eingesetzt, wo lediglich 1 bis 50 Photonen auf den Sensor treffen. Solche luftgestützten Sensoren werden auch als SPL-LIDAR bezeichnet (SPL = "single photon lidar"). Bei nur wenigen Photonen ist das Distanzrauschen jedoch erheblich und beträgt typisch 10mm bis 100mm. Die vorliegende erfinderische Vorrichtung ermöglicht hingegen Messungen mit einem Distanzrauschen von weit weniger as 1 mm. Zum Beispiel wird eine Messgenauigkeit von 0.1 mm ermöglicht, was einer typischen Zeitauflösung von einer Pico-Sekunde oder weniger entspricht. Diese hohe Messgenauigkeit wird durch Massnahmen erreicht, welche weiter unten beschrieben sind.

Kommerzielle SPAD-Arrays sind auch bei Wellenlängen zwischen 800 nm und 1800 nm erhältlich. Diese Sensoren bestehen hauptsächlich aus dem Halbleitermaterial InGaAs. Auch diese Sensoren weisen je nach Design eine externe oder interne Matrix-Struktur über die photo-sensitive Fläche auf. Distanzmesssysteme mit SPAD-Arrays in diesem Spektralbereich haben beispielsweise den Vorteil, dass das solare Hintergrundlicht (Tageslicht) gegenüber dem sichtbaren Wellenlängenbereich erheblich niedriger ist und dass dadurch dieser störende Lichtstrom eine Signaldetektion mittels SPAD-Arrays weniger beeinträchtigt.

Das Besondere dieser SPAD-Array-Sensoren ist die sehr hohe Photoempfindlichkeit, wobei die SPAD-Arrays hauptsächlich dazu ausgelegt sind, einzelne Photonen einwandfrei detektieren zu können. Deshalb werden sie auch als "Multi Pixel Photon Counter" (MPPC) bezeichnet. Die SPAD-Arrays bestehen aus hunderten oder tausenden von Mikrozellen, wobei die Mikrozellen parallel zu einem oder mehreren Ausgangssignalen geschaltet sind und so in der Lage sind, tausende oder hundertausende von Photonen gleichzeitig zu empfangen. Zudem sind auch bei solarem Hintergrundlicht nach wie vor ausreichend freie Zellen für die Signalphotonen vorhanden.

Im Gegensatz zu den vergleichsweise teuren Photomultiplier-Tubes mit grossem Zeitjitter, sind die modernen SiPM-Sensoren kostengünstig und haben Zeitjitter im Pikosekunden- bis Sub-Pikosekunden-Bereich. Zudem werden die SiPM-Arrays mittels eines konventionellen CMOS-Technologieprozesses gefertigt, was zusätzlich die Integration von elektronischen Bauteilen und Schaltungen ermöglicht. Des Weiteren haben SPADs und SPAD-Arrays gegenüber konventionellen APDs beispielsweise eine niedrige Durchbruchspannung ("break voltage"). Bei Silizium-SPADs sind diese Spannungen zum Beispiel bei 25-50 V, was die Ansteuerung vereinfacht. Für die SPAD-Arrays aus dem Halbleitermaterial InGaAs gilt vergleichbares.

Die hohe Photoempfindlichkeit ist zurückzuführen auf den Avalanche-Mechanismus, wobei die einzelnen Mikrozellen des Arrays beispielsweise im Overvoltagebereich betrieben werden ("reverse voltage beyond the break voltage"), das heisst über der Durchbruchspannung (Breakspannung), bei welcher ein einzelnes Photon eine Lawine von Elektronen auslöst, wodurch das Signal je nach Einstellung stark verstärkt wird, z.B. eine Verstärkung bis zu einem Faktor von einer Million. Der dem Photon zugeordnete Strom ist wegen seiner Stärke leicht in ein Spannungssignal zu wandeln und ohne wesentliche Verstärkung einer Signalauswerteeinheit zuzuführen.

Ein SPAD-Array ist in der Lage mehrere Photonen gleichzeitig zu empfangen, wobei die Ströme der vielen Mikrozellen auf dem Sensorchip addiert werden können und anschliessend beispielsweise über einen Widerstand oder einen Transimpedanzverstärker in ein Spannungssignal gewandelt werden. Der SPAD-Array kann beispielsweise derart konfiguriert sein, z.B. mit mehr als zehntausend Mikrozellen, dass er sich wie ein analoger Photosensor verhält, wobei die Kennlinie beispielsweise bei schwachen Empfangssignalen annähernd proportional zur Intensität des einfallenden Laserimpulses ist.

In der Literatur wird unterschieden zwischen SPAD-Array Operationen im Linear-Modus, Geiger-Modus und SPL-Modus (SPL, "Single Photon Lidar").

Im Linear-Modus unterhalb der Durchbruchspannung tritt eine sperrspannungs- und temperaturabhängige Verstärkung auf und SPAD-Arrays können beispielsweise zum Aufbau hochempfindlicher Photoempfänger mit strahlungsleistungsproportionaler Ausgangsspannung verwendet werden.

Im Geiger-Modus und SPL-Modus, d.h. jeweils im Betrieb oberhalb der Durchbruchspannung können SPAD und SPAD-Arrays für die Einzelphotonzählung verwendet werden. Bei den SPADs erzeugt im Geiger-Modus jedes einzelne Pixel ein Ausgangssignal, wobei die Elektronenlawine durch genau ein Photon ausgelöst wird. Trifft ein Photonenpaket aus mehreren Photonen ein, so wird kein grösseres Signal gemessen. Es ist daher keine Amplitudeninformation vorhanden.

Im Geiger-Modus erzeugt ein einfallendes Photonenpaket lediglich ein (binäres) Eventsignal, welches nicht proportional zur Anzahl Photonen im Photonenpaket ist.

Unter SPL-Modus versteht man einen im Geiger Mode betriebenen SPAD-Array, wobei viele Mikrozellen parallel zu einem Ausgangssignal geschaltet sind. Bei eintreffenden Photonenpaketen mit nur wenigen Photonen addieren sich die einzelnen Lawinen praktisch linear und die Amplitude des Ausgangssignals ist daher proportional zur Anzahl erfasster Photonen.

Die Erholungszeit der Mikrozellen nach einem photonischen Trigger ist nicht Null sondern beispielsweise zwischen 5-50 Nanosekunden, wodurch die scheinbare Empfindlichkeit des SPAD-Arrays für nachfolgend eintreffende Photonen reduziert wird. Dies hat aber beispielsweise den Vorteil, dass der Sensor einen Signalstärkenbereich mit hoher Dynamik erfassen kann. Diese Nichtlinearität ist bei SPAD-Arrays mit einer grossen Anzahl von Mikrozellen (>1000) monoton und führt einerseits zu einer Amplitudenkompression zwischen Eingangs- und Ausgangssignal und anderseits, bei grösser werdendem Eingangssignal, zu einem abgeschwächt zunehmendem Ausgangssignal. Interessanterweise sättigt das Ausgangssignal von SPAD-Arrays mit einer hohen Anzahl von Mikrozellen (>1000) nicht vollständig, so dass auch bei einem Empfangsimpuls mit einer sehr hohen Photonenzahl von weit über einer Million eine Amplitudenänderung messbar ist.

Ein SPAD-Array mit ausreichender Zellenzahl erfasst über einen grossen Dynamikbereich die Empfangssignalamplitude und komprimiert gewissermassen die Eingangs-Amplitude von sehr kleinen bis sehr grossen Signalen. Der SPAD Array übersteuert nie, dies auch bei sehr grossen Signalen nicht, z.B. auch dann nicht, wenn die Strahlung von einem winkelpräzisen Retroreflektor zurückgeworfen wird. Bei einer Photonenzahl von 10⁹ nähert sich das Ausgangssignal des SPAD-Arrays asymptotisch einer maximalen Grenzspannung, welche angepasst ist an die nachfolgende Verstärkerschaltung und garantiert, dass die nachfolgende Elektronik bis zur Zeitmessschaltung nicht übersteuert wird. Dadurch ist eine genaue Distanzmessung über einen hohen Dynamikbereich erst möglich.

Bei der Laserdistanzmessung auf unterschiedliche Distanzen und variierende Oberflächen kann die Anzahl der Photonen beispielsweise variieren von weniger als 10 bis über 10⁹. SPAD-Arrays weisen demgegenüber einen Kompressionsfaktor der gemessenen Signalamplitude aus, der gegenüber der tatsächlichen Signalamplitude mindestens 10⁴, typischerweise 10⁸, beträgt. Mit SPAD-Arrays kann daher sowohl auf schwarze diffuse Targets als auch auf Retroreflektoren gemessen werden, ohne dass die Empfangseinheit eine Signalregelung benötigt. Durch die grosse Verstärkung weisen SPAD-Arrays zudem beispielsweise ein niedriges Rauschen auf und SPAD-Arrays mit hohem Füllfaktor zeigen ein für Distanzmessungen geeignetes Signal-Rausch-Verhältnis (SNR, "Signal-to-Noise-Ratio"). Je mehr Mikrozellen ein SPAD-Array aufweist, umso grösser ist das SNR.

Durch den grossen bereitgestellten Dynamikbereich der SPAD-Anordnung, z.B. von einer Einzelphoton-Zählung bis in einen Bereich wo herkömmlich verwendete Sensoren übersteuern, ist die effektive Amplitude des Empfangssignals also unabhängig von der zurückkommenden Signalintensität jeweils explizit im erfassten Signal enthalten und muss beispielsweise nicht über sekundäre Signalmerkmale, beispielsweise eine Pulsbreite, abgeleitet werden. Dadurch wird die Signalverarbeitung sowie die Bestimmung und gegebenenfalls Kompensation eines Range Walks vereinfacht und beschleunigt. Insbesondere können somit die oben erwähnten Limitierungen des Schwellwertverfahrens und des WFD-Verfahrens weitgehend überwunden werden. Insbesondere kann somit aber bereits mit einer in der Umsetzung vergleichsweise simplen auf Schwellwert basierender Diskriminatorschaltung dieselbe oder eine bessere Distanzmessgenauigkeit erreicht werden, wie beispielsweise mit vergleichsweise komplexeren Verstärkerschaltungen bestehend aus einstellbaren Gainstufen oder logarithmischen Bausteinen.

Eine Ausführungsform der Erfindung bezieht sich deshalb darauf, dass die Recheneinheit konfiguriert ist um basierend auf einem Passieren eines Schwellwerts durch das Empfangssignal einen Zeitwert bezüglich eines Empfangszeitpunkts des Empfangssignals abzuleiten, und um basierend auf der Distanzkorrektur-Information und des Signaturparameters, insbesondere der Amplitude, des Empfangssignals einen beim Ableiten des Zeitwerts auftretenden Zeitoffset des Zeitwerts zum tatsächlichen Empfangszeitpunkt des durch den Zeitwert erfassten Empfangssignals abzuleiten, wobei die Recheneinheit beim Ableiten des Zeitwerts den Zeitoffset berücksichtigt. Insbesondere umfasst die Distanzkorrektur-Information mindestens eines von folgendem: eine Lookup-Tabelle die eine Korrelation zwischen Werten eines für das Ableiten der Distanz verwendeten Parameters, z.B. ein Zeitoffset oder ein Distanzoffset, und Werten des Signaturparameters, insbesondere Amplitudenwerten, des Empfangssignals ermöglicht, und eine Funktion, welche basierend auf Werten des Signaturparameters, insbesondere Amplitudenwerten, des Empfangssignals als Funktionsparameter Werte eines für das Ableiten der Distanz verwendeten Parameters, z.B. ein Zeitoffset oder ein Distanzoffset, ausgibt.

Eine Distanzkorrektur-Information kann aus der funktionalen Beziehung zwischen den Distanzoffsets und Signaturen der Impulsform gewonnen werden. Beispielsweise bei TDC-Zeitmessschaltungen aus der Pulsbreite oder aus der Steilheit der Anstiegsflanke, oder bei WFD-Zeitmessschaltungen aus dem Kurvenmaximum, der Amplitude am Wendepunkt, Maximalwert der Steigung, Maximalwert der Krümmung, insbesondere der steigenden Flanke, etc. Wichtig ist, dass die funktionalen Beziehungen zwischen Distanzoffset (Range-Walk) und der aus dem Impuls gewonnenen Signatur monoton sind.

Die Lasersignale eines Distanzmessers sind in der Regel mit einer Impulskodierung beaufschlagt. Typische Impulsraten sind zwischen kHz bis GHz. Experimente haben gezeigt, dass mit SPAD-Arrays bei Spannungen im Overbreakbetrieb solche Signale gut empfangen werden können. Auch Pulspakete (Bursts) sind eindeutig und beinahe rauschfrei mit SPAD-Arrays zu empfangen. Dies beispielsweise auch dann, wenn die Erholungszeit (Recovery Time) der Mikrozellen mit zehn Nanosekunden recht lang ist. Aufgrund des analogen Aufbaus von SPAD-Arrays kann auch ein beispielsweise durch Umgebungslicht präsenter Photostrom empfangen werden. Das Lasersignal ist dann dem elektrischen Photostrom des Umgebungslichts überlagert. Zum Beispiel wird der durch den Laserpuls erzeugte Stromstoss am Ausgang des SPAD-Arrays noch Hochpass gefiltert, damit die langsame hintere Signalflanke verkürzt wird. Der Ausgangsimpuls wird dadurch zu einem kurzen Signalimpuls, z.B. mit einer Pulsdauer kleiner als eine Nanosekunde. Solche kurzen Pulse mit steilen Flanken sind für eine präzise Zeit- und somit auch Distanzmessung geeignet.

Eine Ausführungsform bezieht sich darauf, dass der Distanzmesser eine Empfangsschaltung mit einem Differenzierer aufweist, insbesondere einem elektrischen Hochpass-Filter.

Ohne Differenzierer, z.B. ein Hochpass-Filter, hat das Ausgangssignal eines SPAD-Arrays im Wesentlichen die Form einer Schrittfunktion mit sehr steilem Anstieg (< 200 ps) und langsamen Abfall (>>10 ns). Mit einer elektrischen Differenziereinheit ergeben sich beispielsweise die Vorteile einer kurzen Pulsform und die Anstiegsgeschwindigkeit der Anstiegsflanke der SPAD-Antwort geht über in eine Pulsbreite, wodurch beispielsweise eine Pulsbreitenmessung ermöglicht wird. Je stärker der Laserpuls ist, umso steiler ist die Anstiegsflanke vor dem Hochpass-Filter (Differenzierer), wodurch die Pulsbreite nach dem Differenzieren amplitudenabhängig wird. Dadurch ist beispielsweise eine Range Walk Kompensation möglich. Die Verwendung eines Differenzierers hat jedoch keinen Einfluss auf die Erholungszeit des SPAD-Arrays.

Weiter wurden bereits erste Realisierungsversuche unternommen, um mehr elektronische Funktionalität in die SPAD-Arrays zu integrieren. Beispielsweise wurden bereits jeder Mikrozelle zugeordnete Zeitmesschaltungen ("TOFcircuitries"). Diese messen die Laufzeit (TOF, "Time-of-Flight"). Es existieren zum Beispiel SPAD-Array Implementierungen, wobei nahe bei den Mikrozellen eine präzise Photonenzählung integriert ist, die ohne einen nachgeschalteten Analog-Digital-Wandler (ADC, "Analog-Digital-Converter") auskommt. Zudem kann beispielsweise bei jeder Mikrozelle je eine Zeitmesschaltung (TDC, "time to digital converter") integriert sein. Als Ausgang des SPAD-Arrays wird ferner beispielsweise ein digitales Interface verwendet. Solche Bausteine sind voll digital und brauchen kein "mixed signal processing" bei der CMOS-Herstellung.

Eine weitere Ausführungsform der Erfindung bezieht sich darauf, dass der Distanzmesser eine Empfangsschaltung aufweist, die konfiguriert ist für eine Verarbeitung des Empfangssignals und zur Bereitstellung von mindestens einem von folgendem: eine Wellenform-Digitalisierung des Empfangssignals mit sub-Picosekunden genauer Zeitauflösung, eine Zeitmessschaltung mit einem Zeit-Digital-Konverter, und eine Phasenmessung des Empfangssignals bezüglich eines durch die Sendestrahlung bereitgestellten Sendesignals.

Bei mehrkanaligen Distanzmesseinheiten (Parallelisierung von Distanzmessungen), bestehend aus einem Multibeam-Emitter und Receiver bieten sich beispielsweise TDC-Zeitmessschaltungen in einem FPGA ("Field Programmable Gate Array") als sehr kompakte und ebenfalls parallelisierbare Auswerteeinheit an. Mit einem TDC kann ferner eine Pulsbreitenmessung erfolgen, jedoch keine Amplitudenmessung. Eine Amplitudenmessung erfordert beispielsweise eine zusätzliche Messeinheit.

Demgegenüber ist mittels Wellenform-Digitalisierung (WFD) beispielsweise eine höhere Zeitauflösung als mit bisherigen TDC und zusätzlich eine einfache Amplitudenmessung möglich.

Eine weitere Ausführungsform der Erfindung ist insbesondere dadurch gekennzeichnet, dass die Empfangsschaltung und die Recheneinheit derart konfiguriert sind, dass die Amplitude des Empfangssignals basierend auf mindestens einem von folgendem abgeleitet wird: einem Kurvenmaximum des Empfangssignals, einem Wendepunkt des Empfangssignals, einem Maximalwert der Steigung des Empfangssignals, insbesondere der steigenden Flanke, einem Maximalwert der Krümmung des Empfangssignals, insbesondere der steigenden Flanke, einer Krümmungsdifferenz bezüglich zwei Positionen in der steigenden und/oder der fallenden Flanke des Empfangssignals, einer Pulsbreite eines durch das Empfangssignal repräsentierten Pulses, einer Pulsform eines durch das Empfangssignal repräsentierten Pulses, insbesondere wobei die Pulsform mittels Spline-Interpolation oder eines Resampling-Algorithmus abgeleitet wird.

Eine weitere Ausführungsform der Erfindung ist dadurch gekennzeichnet, dass die SPAD-Anordnung derart konfiguriert ist, dass sie mindestens eine der folgenden Eigenschaften aufweist: eine Photosensitivität für Wellenlängen zwischen 300 nm bis 1100 nm, insbesondere wobei die SPAD-Anordnung auf einem Silizium-Empfänger basiert, eine Photosensitivität für Wellenlängen zwischen 700 nm bis 2000 nm, insbesondere wobei die SPAD-Anordnung auf einem InGaAs-, Ge-, PbSe- oder MCT-Empfänger basiert, und einen Overbreak-Betriebsmodus.

Einerseits ist man ferner zum Beispiel daran interessiert, dass möglichst alle Mikrozellen eines SPAD-Arrays eine gleichmässige Signalstrahlung zugeführt bekommen, wodurch sich der SPAD-Array ähnlich verhält wie eine Avalanche-Photodiode (APD) im Linearmodus. Anderseits zeigen SPAD-Arrays ein so genanntes Fehlrichtdiagramm, wobei die Laufzeit der Signalantwort abhängig ist von der Position des Lichtflecks auf dem SPAD-Array. Zum Beispiel sind die Mikrozellen am Rand des SPAD-Arrays langsamer als in der Mitte. Durch eine gleichmässige Beleuchtung aller Mikrozellen kann dieser Laufzeiteffekt herausgemittelt werden. Als Lichtmischer bieten sich besonders Lichtleiter an, weil durch diese kein Licht verloren geht.

Eine Ausführungsform bezieht sich deshalb darauf, dass der Empfangspfad für eine Lichtmischung mittels Faserkopplung konfiguriert ist, so dass zurückkommende Teile der Sendestrahlung gleichmässig auf die SPAD-Anordnung verteilt werden, insbesondere wobei die Lichtmischung auf mindestens einem von einem Diffusor, einem faseroptischen Lichtleiterstab, einem Lichtleiter mit Scrambler, einer Vierkantfaser, einem Lichttrichter, einer Blende, und einer Defokussierung basiert.

Eine weitere Besonderheit von SPAD-Anordnungen besteht beispielsweise darin, dass einzelne Subsets von Mikrozellen gesondert aktivierbar sind. Eine zeitlich unterschiedliche Aktivierung von einzelnen Subsets von Mikrozellen, beispielsweise alternierend die geraden und die ungeraden Zeilen eines SPAD-Arrays, führt beispielsweise zu einer Verkürzung der Erholungszeit des SPAD-Arrays, wodurch eine schnellere Lasermodulation oder Schussrate möglich ist.

Gemäss einer Ausführungsform weist die SPAD-Anordnung eine Vielzahl von Mikrozellen auf und ist derart konfiguriert, dass die Mikrozellen einzeln und/oder in Mikrozellengruppen auslesbar sind und dadurch ein erster Satz von einzeln auslesbaren Teilbereichen der SPAD-Anordnung definierbar ist. Auslesbar bedeutet, dass die Mikrozellen oder die Mikrozellengruppen einen Signalausgang haben, der die Bestimmung der Laufzeit in Pikosekunden oder Subpikosekunden zulässt. Die Recheneinheit ist ferner konfiguriert zur Steuerung des Empfängers basierend auf einem vorprogrammierten Messablauf für das Erfassen des Empfangssignals, wobei der Messablauf das Erfassen des Empfangssignals mittels einer definierten zeitlichen Abfolge von Auslesungen einzelner Teilbereiche des ersten Satzes von Teilbereichen definiert.

Einzelne Subsets von Mikrozellen können ferner gesondert angesteuert und/oder ausgelesen werden. Dadurch ist beispielsweise eine derartige Anordnung möglich, wobei nur ein paar Mikrozellen, z.B. eine Spalte in der Mitte des SPAD-Arrays, im linearen Bereich angesteuert wird (Operationsspannung < Breakspannung), wobei die Amplitude des Empfangssignals auch bei hoher Übersteuerung erfasst wird, mit einer vergleichsweise höheren (Zeit- und/oder Amplituden-) Auflösung als mit anderen Mikrozellen, welche über der Durchbruchspannung angesteuert werden. Dadurch ist beispielsweise eine präzise Amplitudenmessung sowohl im unteren als auch im oberen Signalbereich möglich, wodurch auch eine genaue Kompensation des Rangewalk-Fehlers ermöglicht wird.

Gemäss einer weiteren Ausführungsform weist die SPAD-Anordnung eine Vielzahl von Mikrozellen auf und ist derart konfiguriert, dass die Mikrozellen einzeln und/oder in Mikrozellengruppen auslesbar sind, wobei die SPAD-Anordnung ferner derart konfiguriert ist, dass ein zweiter Satz von einzeln auslesbaren Teilbereichen der SPAD-Anordnung definiert ist, wobei die Teilbereiche des zweiten Satzes von Teilbereichen jeweils derart konfiguriert sind, dass sie in einem linearen Erfassungsmodus unterhalb der Durchbruchspannung betrieben werden, und dass ein dritter Satz von einzeln auslesbaren Teilbereichen der SPAD-Anordnung definiert ist, und die Teilbereiche des dritten Satzes von Teilbereichen jeweils derart konfiguriert sind, dass sie in einem Overbreakmodus über der Durchbruchspannung betrieben werden.

Mittels eines Pikosekundenlasers wird beispielsweise ein niedriger Zeitjitter und ein kleinerer amplitudenabhängiger Range Walk (Distanzoffset vs. Empfangssignalamplitude) erreicht. Wie erwähnt dauert das Ausgangssignal des SPAD-Arrays nach einem Hochpassfilter z.B. maximal eine Nanosekunde. Die Anregung des SPAD-Arrays mittels Laser erfolgt beispielsweise also bevorzugt wesentlich kürzer als diese Signalantwort. Dadurch wird der zeitliche Schwerpunkt des Ausgangssignals praktisch amplitudenunabhängig, wodurch sich auch die Variation des systematischen Distanzoffsets (Range Walk) minimiert.

Gemäss einer Ausführungsform der Erfindung ist die Strahlungsquelle konfiguriert um die Sendestrahlung als gepulste Lasermessstrahlung bereitzustellen, insbesondere mit einer einzelnen Pulsdauer von weniger als 600 Pikosekunden.

Weiter kann gemäss einer weiteren Ausführungsform der Empfänger mehrere SPAD-Anordnungen aufweisen, wobei die mehreren SPAD-Anordnungen eindimensional oder zweidimensional zueinander angeordnet sind, insbesondere wobei jede SPAD-Anordnung eine separate Ansteuerelektronik und/oder Auswerteelektronik aufweist. Oft werden bei solchen Anordnungen von SPAD-Arrays (SPAD-Anordnungen) die einzelnen Arrays als Pixel bezeichnet, obwohl jedes dieser Pixel selber aus hunderten bis zehntausenden von Mikrozellen besteht.

Das erfindungsgemässe System und der erfindungsgemässe Laserdistanzmesser werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b:: Prinzipdarstellung eines elektro-optischen Distanzmessers nach dem Pulslaufzeitprinzip;
- Fig. 2a:: schematische Darstellung eines entstehenden Distanzoffsets (Range Walk) in einem Schwellwertverfahren nach dem Stand der Technik (APD im linearen Mode);
- Fig. 2b:: schematische Darstellung eines Distanzoffsets (Range Walk) in einem Schwellwertverfahren mit einem SPAD-Array im Overbreak-Modus;
- Fig. 3a,b:: schematische Darstellung des WFD-Prinzips und der diesbezüglichen Sättigungsproblematik mit einer APD betrieben im linearen Mode;
- Fig. 4a,b:: schematische Darstellung eines Distanzoffsets (Range Walk) in einem Phasen- oder WFD-Verfahren mit einem SPAD-Array im Overbreak-Modus;
- Fig. 5:: schematische Darstellung einer Kennlinie eines SPAD-Arrays;
- Fig. 6:: beispielhaftes Empfangssignal eines SPAD-Arrays für einen erfassten Signalpuls;
- Fig. 7:: beispielhafte Schaltung für eine erfinderische Distanzmessung mittels einer Kombination eines Sensors basierend auf wenigstens einem SPAD-Array mit einer Wellenform-Digitalisierung (WFD) ;
- Fig. 8:: beispielhafte Schaltung für eine erfinderische Distanzmessung mittels einer Kombination eines Sensors basierend auf einem oder mehreren SPAD-Arrays mit einer TDC-Zeitmessschaltung implementiert in einem FPGA;
- Fig. 9:: beispielhafte Ausführungsform einer TDC-Schaltung mit zwei TDC-Kanälen implementiert in einem FPGA für eine Pulsbreitenmessung;
- Fig. 10:: beispielhafte Range Walk Kurven von SPAD-Arrays;
- Fig. 11:: beispielhaftes SPAD-Array mit einzeln ansteuerbaren Subsets von Mikrozellen;
- Fig. 12:: Schematische Darstellung eines faseroptischen Lichtleiters mit Lichtmischer.

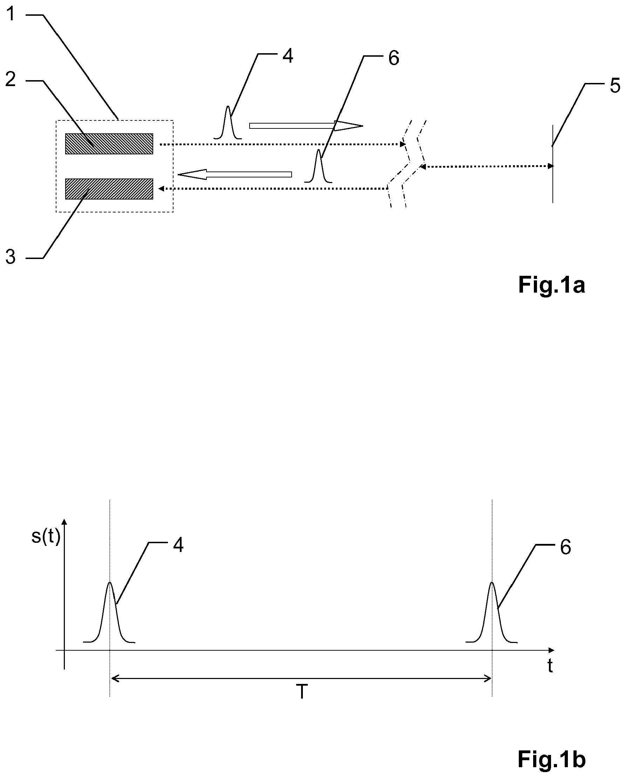

**Figur 1a** zeigt eine Prinzipdarstellung eines elektro-optischen Distanzmessers 1 des Stands der Technik nach dem Pulslaufzeitprinzip. In dem Distanzmesser 1 sind ein Sender 2 und ein Empfänger 3 angeordnet. Der Sender 2 emittiert einen Lichtpuls 4, der nach der Reflektion bzw. Rückstreuung an einem Ziel 5, z.B. ein kooperatives Ziel wie beispielsweise ein Retroreflektor oder ein unkooperatives Ziel wie beispielsweise eine natürliche Oberfläche, wieder als zurückkommender Licht- oder Strahlungspuls 6 vom Empfänger 3 detektiert wird. Anstelle der Lichtpulse kann erfindungsgemäss beispielsweise auch ein kontinuierlich moduliertes Sendesignal verwendet werden.
Wie in **Figur 1b** in Prinzipdarstellung gezeigt, wird die Entfernung aus der Laufzeit T als zeitliche Differenz zwischen dem Startzeitpunkt des Aussendens eines Lichtpulses 4 und dem Empfangszeitpunkt des zurückkommenden Lichtpulses 6 ermittelt. Bei einer linearen Photodiode, beispielsweise eine APD betriebene Diode im Linear-Modus, wird das optische Signal in ein proportionales Signal 6 gewandelt. Die Ermittlung des Empfangszeitpunktes des Signals 6 erfolgt dabei durch die Auswertung eines Merkmals des Signalimpulses s(t), z.B. durch das Passieren einer Signalschwelle oder durch Schwerpunktbestimmung des integrierten Pulsverlaufs. Beim Schwellwertverfahren sind auch andere Methoden zur Messung der Laufzeit T nutzbar, wie beispielsweise die Umwandlung des Empfangssignals in ein bipolares Signal und anschliessende Bestimmung des Nulldurchgangs.

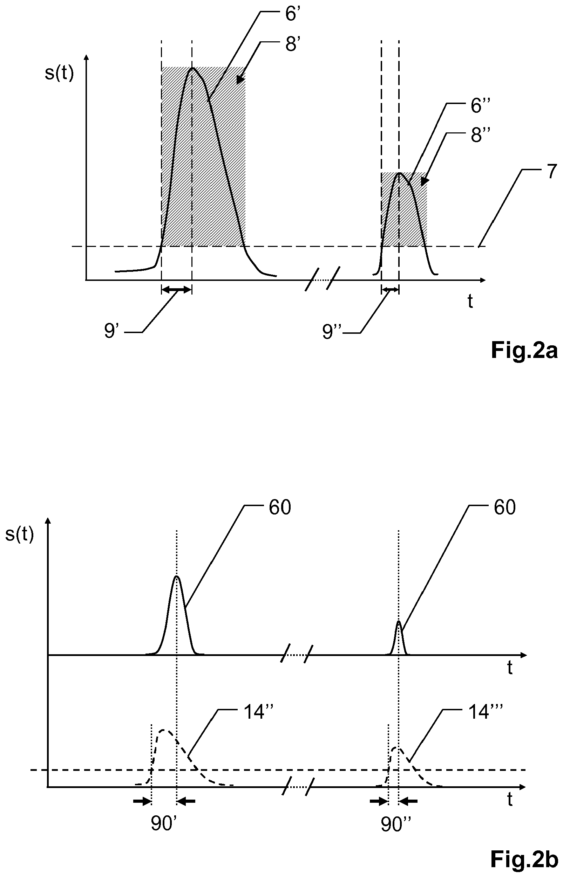

**Figur 2a** zeigt ein Schwellwertverfahren für empfangene Signale 6',6" nach dem Stand der Technik. Um Schrot-Rauschen, Impulsrauschen, Hintergrundanteile oder systematische Störsignale wie beispielsweise durch das optische und elektrische Übersprechen zwischen Sendersignalweg und Empfängersignalweg zu unterdrücken und von einer Detektion auszuschliessen, wird eine Detektionsschwelle 7 verwendet. Unterhalb dieser Detektionsschwelle 7 liegende Signalstärken s(t) führen nicht zu einem Ansprechen der ein Stoppsignal generierenden Empfangseinheit als Diskriminator und somit nicht zu einer Detektion. Überschreitet das Signal s(t) in seiner Intensität die Detektionsschwelle 7 erfolgen die Detektion und damit die Erzeugung des Stoppsignals und die Registrierung des Empfangszeitpunktes. Das von dem Schwellwertverfahren bereitgestellte Ausgangsignal ist somit abhängig vom Erreichen bzw. Überschreiten der Detektionschwelle 7 durch das empfangene bzw. das Eingangssignal.

Bleibt die Signalstärke s(t) jedoch stets unterhalb der Detektionsschwelle 7, so kommt es zu keinem Ansprechen des Diskriminators und das Signal wird nicht detektiert.

Die Schwellenproblematik des Schwellwertverfahrens tritt beispielsweise beim Anmessen auf schwach reflektierende Ziele oder bei hohem optischen/elektrischen Übersprechen auf.

Wenn nun der ausgesendete Puls beispielsweise eine Gauss-Form hat, verschiebt sich der Teil des Pulses 8',8", der über der Detektionsschwelle 7 liegt, wodurch ein variabler zeitlicher Offset 9',9" zwischen der Registrierung des Empfangszeitpunktes und beispielsweise der zeitlichen Position bezüglich der Pulsamplitude (des höchsten Intensitätswerts des Pulses 6',6") entsteht. Dies bedeutet also, dass bei einer Zeitmessung basierend auf der ansteigenden Flanke amplitudenabhängige Timing-Fehler auftreten, welche in der Literatur typischerweise als "Range Walk" bezeichnet werden.

Um den Range Walk zu kompensieren, muss also beispielsweise eine Amplitudeninformation oder eine andere Signatur zur Beschreibung der Stärke des zurückkommenden optischen Signals 60 bekannt sein.

Die reine Schwellwertmethode gewährt deshalb üblicherweise geringere Distanzbestimmungs-Genauigkeiten als die im Folgenden erwähnte Abtastmethode (WFD-Prinzip).

**Figur 2b** zeigt eine weitere schematische Darstellung eines auftretenden Distanzoffsets (Range Walk) in einem Schwellwertverfahren mit SPAD-Array im Overbreak-Modus. Die eintreffenden optischen Pulse 60 werden von einem SPAD-Array empfangen und in ein Strom- oder Spannungssignal V(t) 14",14'" konvertiert. Vergleichbar zur Figur 2a wird ein variabler zeitlicher Offset 90',90" festgestellt, der von der Amplitude des Antwortsignals des SPAD-Arrays abhängt. Für eine genaue Laufzeit- oder Distanzmessung ist daher eine Korrektur des Range Walks notwendig.

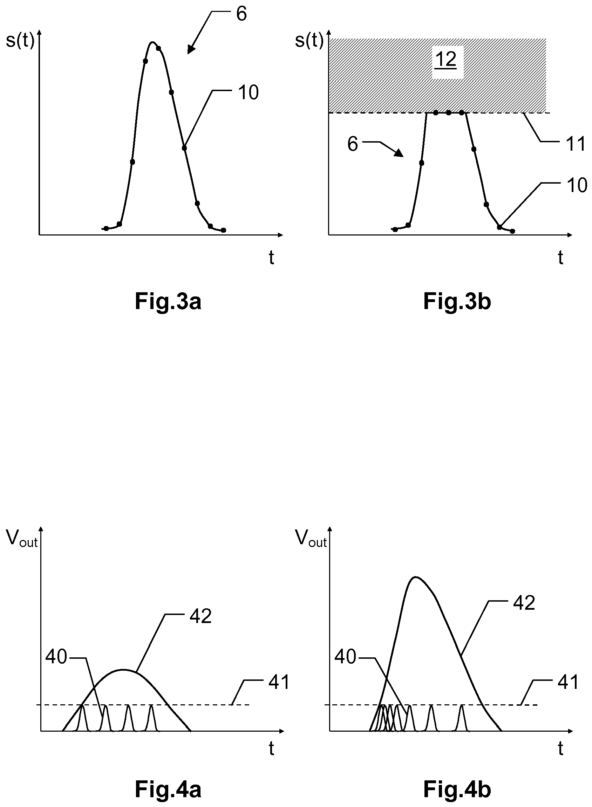

**Figur 3a** veranschaulicht das Prinzip eines Abtastverfahrens (WFD) für zurückgestreute Lichtsignale 60 nach dem Stand der Technik. Das empfangene Lichtsignal wird beispielsweise mit einer im linearen Bereich betriebenen APD ("Avalanche Photodiode") in ein elektrisches Signal 6 gewandelt. Dieses analoge Signal 6 bzw. dessen Signalverlauf s(t) wird zu verschiedenen Zeitpunkten 10 bzw. in zugeordneten Zeitintervallen abgetastet, so dass sich aus dieser Abtastung (Digitalisierung) die Signalform s(t) ableiten lässt.

Da die APD im linearen Bereich betriebenen wird, sind beispielsweise bei Laserscannern Variationen der optischen Signalstärke von über vier Grössenordnungen möglich. Um grosse Variationen des Signalimpulses s(t) detektieren zu können, ist empfängerseitig eine hohe Dynamik erforderlich, welche die vollständige Erfassung bzw. Abtastung des von der Photodiode gelieferten Signals 6 erlaubt. Anderenfalls kann die in **Figur 3b** dargestellte Situation auftreten, dass Teile des Signals 6 ausserhalb des Dynamikbereichs liegen und es zu einer Sättigungsproblematik des Abtastverfahrens kommt. Oberhalb einer Sättigungsgrenze 11 existiert ein gesättigter Bereich 12 der Verstärkerelektronik, in dem keine sinnvoll nutzbaren Abtastwerte 10 des Pulses 6 zur Verfügung stehen. Die Abtastung des Signals 6 ist dann im Wesentlichen auf den unterhalb der Sättigungsgrenze liegenden Bereich beschränkt. Insbesondere bei einer hohen Flankensteilheit ist eine Bestimmung der Signalform und beispielsweise der Amplitudenposition dann schwierig.

**Figuren 4a und 4b** veranschaulichen das Entstehen eines Distanzoffsets (Range Walk) bei einem Phasen- oder WFD-Distanzmessverfahren mit einem SPAD-Array im Overbreak-Modus.

**Figur 4a** zeigt das Antwortsignal Vₒᵤₜ des SPAD-Arrays bei nur wenigen einfallenden Photonen. Einzelne Photonen werden indirekt über die Strom- oder Spannungspulse 40 der durch Elektronenlawinen aktivierten Mikrozellen dargestellt. Vorausgesetzt sind jeweils immer möglichst kurze Laserpulse von weniger als 1000 ps, vorzugsweise <100 ps. Die Triggerung der Mikrozellen geschieht bei niedriger Photostromdichte in mehr oder weniger regelmässigen Zeitintervallen. Jede getriggerte oder aktivierte Mikrozelle erzeugt ein Teilsignalimpuls der Höhe 41. Daraus resultiert eine zeitliche Kurve 42 als die Summe aller Teilsignale der getriggerten Mikrozellen, welche dem Antwortsignal Vₒᵤₜ des SPAD-Arrays entspricht.

**Figur 4b** zeigt das Antwortsignal Vₒᵤₜ des SPAD-Arrays bei starkem oder sehr starkem einfallenden Laserpuls auf den SPAD-Array. Bereits bei der vorderen Flanke des einfallenden Laserpulses werden sehr viele Mikrozellen getriggert, wodurch sich beispielsweise die Form des Signals 42 ändert, insbesondere wobei sich der Schwerpunkt des Signals 42 nach links zu kürzeren Zeiten verschiebt, was einem signalabhängigen Range Walk entspricht. Diese zeitliche Verschiebung ist daher auch von der Anzahl der Mikrozellen abhängig oder genauer vom Verhältnis der Anzahl der auf dem SPAD-Array vorhandenen Mikrozellen zur Anzahl der einfallenden Photonen. Je grösser dieses Verhältnis ist umso geringer ist der zeitliche Offset (Range Walk).

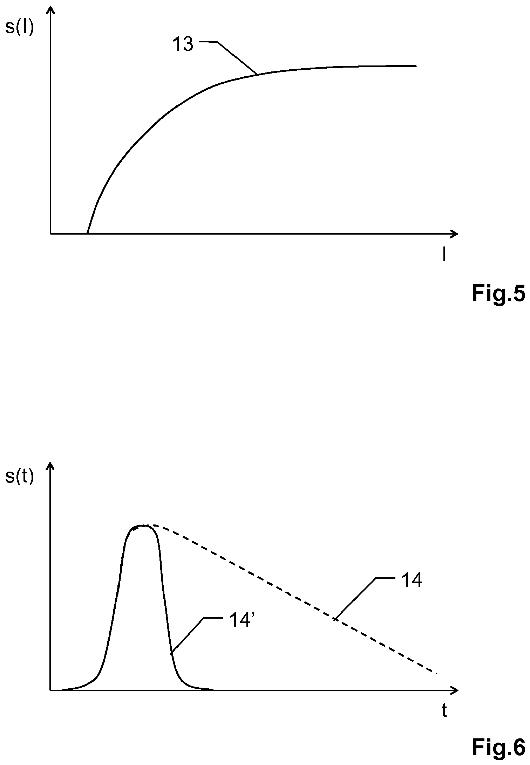

**Figur 5** zeigt beispielhaft eine Kennlinie 13 eines SPAD-Arrays. Der SPAD-Array erfasst über einen grossen Dynamikbereich die Empfangssignalintensität I und komprimiert gewissermassen die Eingangs-Intensität von sehr kleinen bis sehr grossen Signalen. Der SPAD Array übersteuert nie, dies auch bei sehr grossen Signalen nicht, z.B. auch dann nicht, wenn die Strahlung von einem winkelpräzisen Retroreflektor zurückgeworfen wird.

Der SPAD-Array hat also gegenüber einer Photodiode oder APD, betrieben unterhalb der Breakspannung, den Vorteil, dass der Dynamikbereich des photonischen Eingangssignals im Vergleich zum elektrischen Ausgangssignal bereits auf dem Photosensor um Grössenordnungen komprimiert wird. Die erzeugte Signalamplitude s(I) nimmt mit der eintreffenden Empfangssignalintensität I im Wesentlichen logarithmisch zu. Der SPAD-Array kombiniert mit einer einfachen Empfangselektronik kann daher über einen sehr grossen Dynamikbereich eingesetzt werden. Zum Beispiel kann ein SPAD-Array mit beispielsweise 3000 Mikrozellen eine Signaldynamik von über einem Faktor 10⁸ erfassen und die Amplitude eines rückkehrenden Pulses 60 (siehe Fig. 1a) noch ausreichend genau messen.

Mit SPAD-Arrays kann daher sowohl auf unkooperative Ziele, z.B. schwarze diffuse Oberflächen, als auch auf kooperative oder stark reflektierende Ziele gemessen werden, ohne dass die Empfangseinheit eine Signalregelung benötigt. Durch die grosse Verstärkung weisen SPAD-Arrays zudem ein niedriges Rauschen auf und SPAD-Arrays mit hohem Füllfaktor zeigen ein für Distanzmessungen gut geeignetes Signal-Rausch-Verhältnis.

**Figur 6** zeigt beispielhaft ein Ausgangssignal 14 eines SPAD-Arrays für einen erfassten Signalpuls. Die Erholungszeit der Mikrozellen nach einem photonischen Trigger ist nicht Null sondern beispielsweise zwischen 5-50 Nanosekunden. Ohne Differenzierer, z.B. einen Hochpass-Filter, hat das Ausgangssignal 14 eines SPAD-Arrays im Wesentlichen die Form einer Schrittfunktion mit sehr steilem Anstieg, z.B. kleiner als 200 Pikosekunden, und einem langsamen Abfall, z.B. grösser als 10 Nanosekunden.

Mittels einer elektrischen Differenziereinheit kann der durch den Laserpuls erzeugte Stromstoss am Ausgang des SPAD-Arrays beispielsweise Hochpass gefiltert werden, womit die langsame hintere Signalflanke verkürzt wird. Somit kann beispielsweise eine Signalform 14' entsprechend einem Puls mit kurzer Pulsdauer und steilen Flanken erzeugt werden. Zum Beispiel erfolgt nun die Anregung des SPAD-Arrays mit einem Laserpuls der wesentlich kürzer ist als die Signalantwort des SPAD-Arrays, wodurch der zeitliche Schwerpunkt des Ausgangssignals - und entsprechend beispielsweise die Pulsbreite des Signals 14' nach dem Differenzieren - praktisch amplitudenunabhängig ist, wodurch auch die Variation des systematischen Distanzoffsets (Range Walk) minimiert wird. Die Verwendung eines Differenzierers hat jedoch keinen Einfluss auf die Erholungszeit des SPAD-Arrays von beispielsweise etwa 10 Nanosekunden.

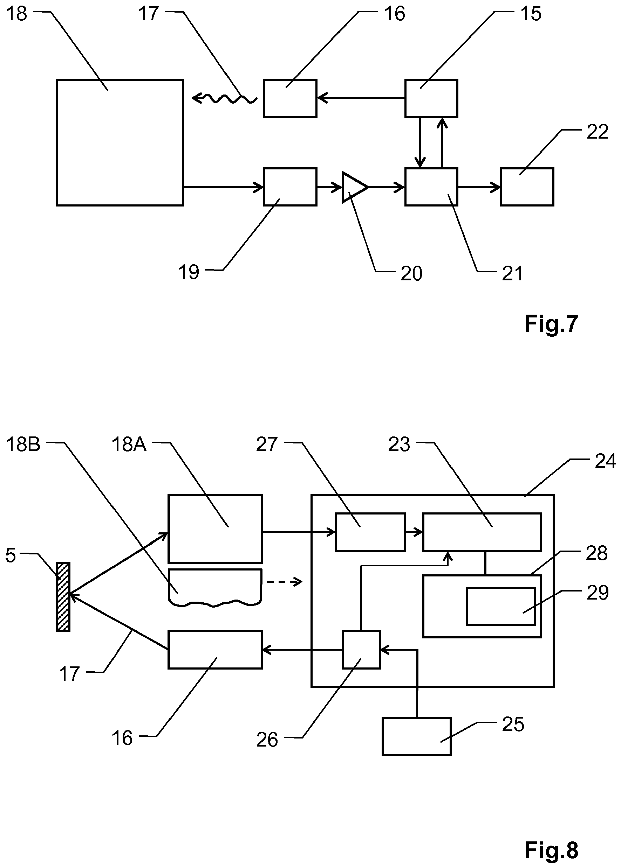

**Figur 7** zeigt beispielhaft eine Schaltung für eine erfinderische Distanzmessung mittels einer Kombination eines Sensors basierend auf einem SPAD-Array mit einer Wellenform-Digitalisierung (WFD).

Zum Beispiel umfasst der erfinderische Distanzmesser einen durch eine Steuereinheit 15 angesteuerten Laser 16 zur Emission einer pulsierten Lasermessstrahlung 17, welche nach der Reflektion bzw. Rückstreuung an einem Ziel (nicht gezeigt) als Empfangsstrahlung auf einen ein SPAD-Array 18 aufweisenden Detektor trifft. Der Detektor kann beispielsweise als "Single-Pixel-Receiver" oder als "Multi-Pixel-Receiver" bereitgestellt werden. Bei einem "Multi-Pixel-Receiver" sind mehrere Signalausgänge vorhanden, indem Teilmengen aller Mikrozellen zu jeweils einem zugehörigen Ausgangssignal zusammengefasst sind.

Das vom SPAD-Array 18 erzeugte wenigstens eine (analoge) Empfangssignal wird einem Differenzierer 19, z.B. einem Hochpass-Filter, zugeführt und anschliessend, beispielsweise über einen Verstärker 20, an eine Wellenform-Digitalisierungseinheit 21 weitergeleitet, wodurch eine hohe Zeitauflösung und eine Bestimmung von Parametern wie beispielsweise Pulsbreite, Pulsform und Signalamplitude ermöglicht wird. Anhand wenigstens eines dieser Parameter lässt sich der Range Walk kompensieren.

Eine Ausführungsform der Wellenform-Digitalisierung (WFD) basiert beispielsweise auf einer Kombination von einer initialen Messsignaldetektion anhand der Schwellwertmethode mit einer Signalabtastung mit nachgeschalteter Signalverarbeitung zur präzisen Identifikation der Amplitude des Messsignals.

Zum Beispiel erfolgt die Messignaldetektion mittels einer (insbesondere analogen) Komparator-Stufe zur Erzeugung eines Komparator-Ausgangssignals abhängig von einer Erfüllung eines Kriteriums durch das eingehende Messsignal.

Alternativ kann auch das Signal während der gesamten Zeitdauer zwischen zwei Sendepulsen abgetastet und aufgenommen und anschliessend auf einem FPGA prozessiert werden.

Die Signalabtastung kann beispielsweise mittels einer ADC-Digitalisierungs-Stufe (ADC, "Analog-to-Digital-Converter") erfolgen, wobei mit einer definierten Abtastrate eine Abtastung eines der Digitalisierungs-Stufe zugeführten Eingangssignals und somit eine Wandlung in abgetastete digitalisierte Werte erfolgt.

Aus der WFD-Abtastung lässt sich somit die Amplitude oder ein andere Signatur, welche die Empfangssignalstärke des Messsignals charakterisiert, ableiten, wodurch beispielsweise der Range Walk Effekt kompensiert werden kann, zum Beispiel mittels vorher oder laufend neu bestimmten Lookup-Tabellen, ermittelt über eine, beispielsweise Geräte-interne, Referenzdistanz.

Die abgeleitete Signalform kann ferner beispielsweise mit einer idealen, im Gerät gespeicherten oder über den Geräteinternen Referenzlichtweg ermittelten Signalform verglichen werden, um beispielsweise Pulsverformungen abzuleiten und zu berücksichtigen, beispielsweise verursacht durch geometrische Eigenschaften und Reflexionseigenschaften der Oberfläche des Zielobjekts, z.B. Einstrahlwinkel oder Art der Oberfläche.

Die kompensierten Distanzmessdaten werden anschliessend beispielsweise an eine Speichereinheit 22 gesendet und einem Benutzer zur Verfügung gestellt.

**Figur 8** zeigt beispielhaft eine Schaltung für eine erfinderische Distanzmessung mittels einer Kombination eines Sensors basierend auf einem oder mehreren SPAD-Arrays 18A, 18B mit einer Zeitmessschaltung bestehend aus einer TDC-Zeitmessschaltung 23 ("Time-to-Digital-Converter") implementiert in einem FPGA 24 ("Field Programmable Gate Array").

SPAD-Arrays sind wegen ihrer grossen und rauscharmen Signalverstärkung beispielsweise für Multi-Kanal-Anordnungen (Multibeam) geeignet. Zum Beispiel bietet sich bei mehrkanaligen Distanzmessern, bestehend aus für eine Parallelisierung der Distanzmessungen konfiguriertem Multibeam-Emitter und Empfänger, eine TDC-Zeitmesschaltung im FPGA als kompakte und ebenfalls parallelisierbare Auswerteeinheit an.

Beim Einsatz eines TDC als Zeitmessschaltung ist die Erfassung der Signalamplitude nicht ohne weiteres möglich.

Als weiteren Parameter kann jedoch leicht die Pulsbreite des differenzierten Ausgangspulses des SPAD-Arrays gemessen werden und mittels einer entsprechenden Korrekturkurve der Distanzoffset (Range Walk) zur Pulsbreite in Beziehung gebracht und die Distanzmessung entsprechend kompensiert werden.

Senderseitig kann beispielsweise ein mit Laserdioden "seeded" Faserverstärker eingesetzt werden, welcher am Ausgang einen 1-zu-N-Faserkoppler aufweist. Mit diesem lässt sich in einfacher weise ein Bündel von Laserstrahlen erzeugen, die den zu vermessenden Gegenstand anstrahlen.

Der Empfänger kann beispielsweise aus mehreren SPAD-Arrays 18A, 18B aufgebaut sein, die entweder eindimensional oder zweidimensional angeordnet sind. Jeder SPAD-Array 18A, 18B hat entweder eine separate Ansteuer- und/oder Auswerteelektronik. Wegen der Kompaktheit ist zum Beispiel ein Set von TDC-Kanälen in einem FPGA gegebenenfalls vorzuziehen. Alternativ können die Ausgänge der SPAD-Arrays gegebenenfalls über einen Multiplexer adressiert und einer gemeinsamen Zeitmesschaltung zugeführt werden. Um die Anzahl der Ausgangssignale zu reduzieren und dadurch Zeitmesseinheiten zu sparen, können die Mikrozellen beispielsweise auch zu wenigen Domänen zusammengefasst werden, beispielsweise in einzelne Quadranten mit je einem Signalausgang. An jedem Signalausgang ist dann beispielsweise eine im FPGA angeordnete TDC-Zeitmesseinheit implementiert.

In der gezeigten Ausführungsform umfasst die Schaltung beispielsweise einen Oszillator 25 als Zeitbasis, z.B. mit sub-ppm ("parts per million") Präzision, welcher einen im FPGA 24 implementierten Clock 26 ansteuert. Der Clock 26 wird einerseits für die Ansteuerung eines Lasers 16 und andererseits als Basis für die im FPGA 24 implementierte TDC-Zeitmessschaltung 23 verwendet. Der Laser 16 emittiert eine pulsierte oder pulsartig modulierte Lasermessstrahlung 17, welche nach der Reflektion bzw. Rückstreuung an einem Ziel 5 als Empfangsstrahlung auf einen ein oder mehrere SPAD-Arrays 18A,18B aufweisenden Detektor trifft. Der Detektor kann beispielsweise als "Single-Pixel-Receiver" oder als "Multi-Pixel-Receiver" bereitgestellt werden. Ferner ist im FPGA 24 beispielsweise ein dem TDC 23 vorgeschalteter Komparator 27 implementiert.

Die Laufzeitmessung basierend auf der Pulsbreite erfolgt auf einer Recheneinheit 28, welche ebenfalls direkt auf dem FPGA 24 implementiert ist, wobei der Range Walk beispielsweise über eine auf dem FPGA 24 implementierte Lookup-Tabelle 29 kompensiert wird.

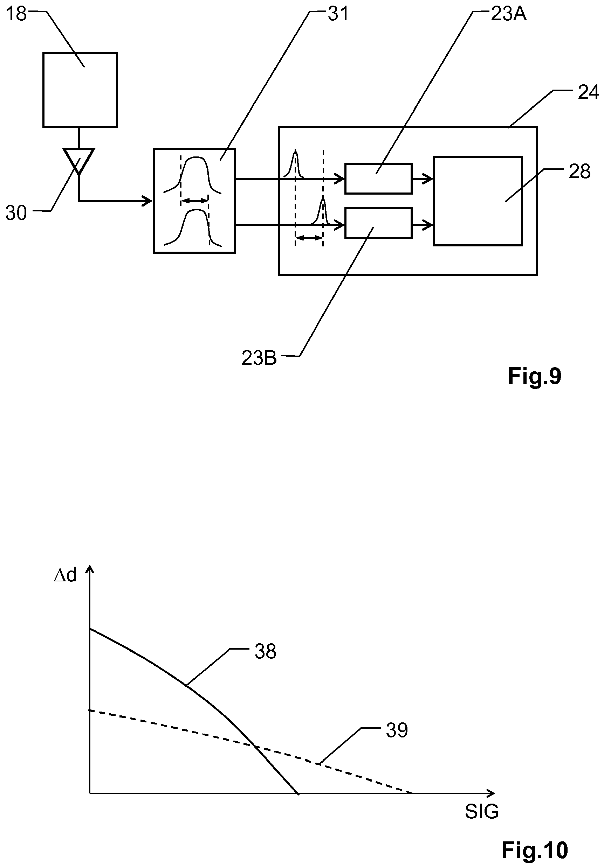

**Figur 9** zeigt beispielhaft eine Ausführungsform einer TDC-Schaltung mit zwei TDC-Kanälen 23A,23B implementiert in einem FPGA 24 für eine Pulsbreitenmessung, z.B. zwecks einer erfindungsgemässen Kompensation eines Distanzoffsets im Rahmen einer Signallaufzeitmessung.

Das beispielsweise durch einen Strom-Spannungs-Wandler 30, z.B. ein Widerstand oder ein Transimpedanzverstärker, gewandelte Detektionssignal des SPAD-Arrays 18 wird einer Signalerzeugungs-Stufe 31 zugeführt. Optional kann das der Signalerzeugungs-Stufe 31 zugeführte Signal beispielsweise vorgeschaltet gedämpft werden durch einen VGA ("Variable Gain Amplifier"), der insbesondere als ein VGA mit regulierbarer Dämpfung ausgebildet ist.

Mit der Signalerzeugungs-Stufe 31 werden zwei analoge, definierte pulsförmige Signale mit einem jeweils definierten zeitlichen Verlauf und definierter Amplitude erzeugt, beispielsweise optimiert für einen Signalbereich eines nachgeschalteten TDCs. Der Abstand der beiden definierten pulsförmigen Signale entspricht der Pulsbreite des Signals des SPAD-Arrays. Diese synthetisch erzeugten Signale werden jeweils einer TDC-Messeinheit mit hoher Zeitauflösung zugeführt. All diese elektronischen Module können beispielsweise wie in Figur 8 dargestellt auf einem FPGA 24 implementiert sein.

Die Signalerzeugungs-Stufe 31 weist beispielsweise zwei Komparator-Stufen (nicht gezeigt) und zwei Impulserzeuger-Komponenten (nicht gezeigt) auf. Die beiden Komparator-Stufen der Signalerzeugungs-Stufe 31 triggern jeweils auf die steigende, respektive die fallende Flanke des Eingangssignals.

Zum Beispiel, wird der Komparator für die steigende Flanke getriggert, sofern das am Komparator anliegende Signal einen vorgegebenen Schwellwert überschreitet. Der Komparator erzeugt darauf ein Komparator-Ausgangssignal, welches beispielsweise über zwei elektronische Flip-Flop-Schaltungen (d.h. bistabile Kippglieder, high-speed Logikgatter, nicht dargestellt) der Impulserzeuger-Komponente zugeführt wird, wobei der Impulserzeuger-Komponente ggf. noch ein Tiefpass-Filter nachgeschaltet ist.

Am FPGA-Eingang liegt also ein durch das eigentlich eingehende Signal (z.B. detektierter Lichtpuls, und dabei durch Passieren einer Schwelle) getriggertes Form-Signal an. Mit diesen Funktionalitäten wird, zusammen mit den dem FPGA 24 vorgeschalteten Komponenten, eine Zeitmessschaltung realisiert.

In analoger Weise kann eine Zeitmessschaltung im zweiten Kanal durch einen Komparator ausgebildet sein, welcher auf die fallende Flanke des Eingangssignals triggert.

Eine Recheneinheit 28 auf dem FPGA 24 ermittelt zusammen mit dem Ergebnis aus dem ersten Kanal die Breite des Eingangssignals und führt eine Laufzeitmessung unter Berücksichtigung der Pulsbreite durch, wobei die Pulsbreite herangezogen wird, um einen durch die unbekannte Amplitude des eigentlich eingehenden Signals verursachten Distanzoffset (Range Walk) zu beheben.

Alternativ kann die Anzahl der TDC-Kanäle beispielsweise erhöht sein, ohne dass die Komplexität der gesamten Distanzmesschaltung sich wesentlich erhöht.

Zum Beispiel kann die Signalerzeugungs-Stufe 31 derart konfiguriert sein, dass zwei Messpunkte auf der steigenden Flanke erfasst werden, woraus der nachgeschaltete FPGA 24 die Steigung der Flanke bestimmen kann. Die Steigung kann als Signatur für die Empfangssignalstärke herangezogen werden, um einen erzeugten Distanzoffset (Range Walk) zu beheben. Die Steigung kann aber auch zur Elimination von weiteren Artefakten verwendet werden. Ist die Steigung nicht im erwarteten Verhältnis zur Pulsbreite, so liegt allenfalls eine Störung des Empfangssignals durch eine besondere Anordnung des Lasermessstrahls zum Zielobjekt vor. Trifft der Laserstrahl beispielsweise an einer Objektkante teilweise das erste Objekt und teilweise ein dahinter liegendes Objekt, so entsteht ein Zweifachreflex. Sind die beiden Objekte nah beabstandet (< 1m) so überlappen sich die beiden zugeordneten elektronischen Empfangspulse und die Relation zwischen Steilheit der Anstiegsflanke zu Pulsbreite weicht von einem vorgängig bestimmten Referenzwert ab. Dadurch lassen sich Doppelziele, die zu Überlappung von Empfangsimpulsen führen, erkennen, korrigieren oder zumindest teilweise eliminieren.

Bei einem vierten Kanal nach dem Schwellwertprinzip können die einzelnen den Doppelzielen zugeordneten Distanzen in jedem Fall und ohne a-priori Annahmen sogar genau gemessen werden.

Optional kann zur oben beschriebenen TDC-Zeitmessschaltung noch eine herkömmliche WFD-Zeitmessschaltung (nicht gezeigt) in paralleler Anordnung bestückt sein. Dieser Kanal besteht im Wesentlichen aus einer Verstärkerstufe, einem Tiefpass- oder Bandpassfilter, und einem ADC. Die durch den ADC erzeugten digitalen Daten können insbesondere demselben FPGA zugeleitet werden wie die Daten der TDC-Zeitmessschaltung.

**Figur 10** zeigt beispielhaft zwei Range Walk Kurven, d.h. ein variabler Distanzoffset Δd, von typischen SPAD-Arrays als Funktion einer Signatur SIG des Signalverlaufs des SPAD-Ausgangssignals. Wie anhand der Figuren 4a und 4b beschrieben, ist die Signalantwort von SPAD-Arrays von der Anzahl der Mikrozellen abhängig. SPAD-Arrays mit nur wenigen Mikrozellen neigen zu einem grösseren Range Walk 38, da die Signalkompression früher einsetzt, wohingegen bei SPAD-Arrays mit beispielsweise mehr als 3000 Mikrozellen der Range Walk 39 geringer ist, da das Ausgangssignal über einen grösseren Signalbereich in einem quasilinearen Bereich bleibt. Zum Beispiel ist in der Figur die Empfangssignalstärke als Signatur SIG angegeben, welche wie bereits erwähnt als Mass für die Signalstärke dient.

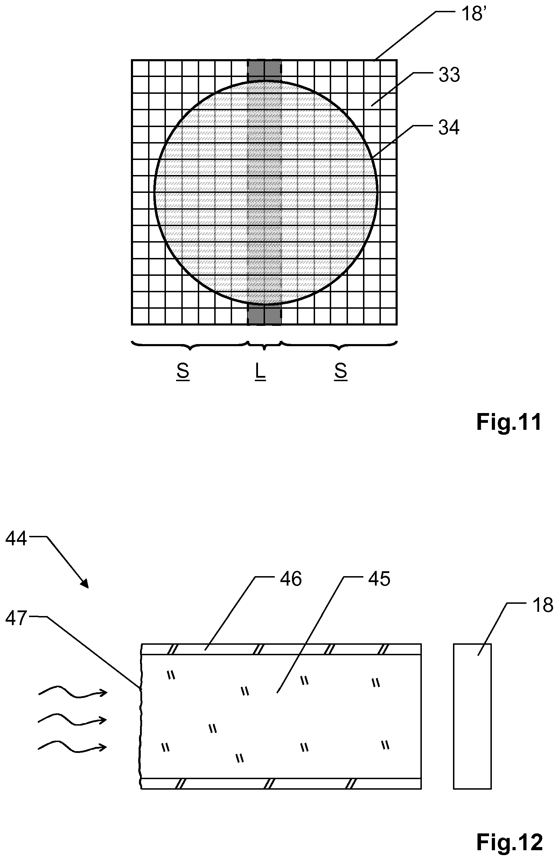

**Figur 11** zeigt beispielhaft ein SPAD-Array 18"', welches derart konfiguriert ist, dass einzelne Subsets von Mikrozellen 33 gesondert ansteuerbar oder auslesbar sind.

Einerseits kann mit einer zeitlich unterschiedlichen Aktivierung von einzelnen Mikrozellen, beispielsweise alternierend die geraden und die ungeraden Zeilen eines SPAD-Arrays, eine Verkürzung der Erholungszeit des SPAD-Arrays, also eine schnellere Puls-Schussrate, ermöglich werden.

Im gezeigten Beispiel werden ferner die Mikrozellen 33 in einer Spalte L in der Mitte des SPAD-Arrays im Linear-Modus angesteuert (Operationsspannung < Breakspannung), wohingegen die Mikrozellen 33 in den der Spalte L benachbarten Bereichen S im SPL-Modus ("Single Photon Modus", Operationsspannung > Breakspannung) angesteuert werden.

Im Linear-Modus wird die erzeugte Amplitude des Empfangssignals auch bei hoher Übersteuerung mit einer hohen Auflösung erfasst. Dadurch ist beispielsweise eine präzise Amplitudenmessung sowohl im unteren als auch im oberen Signalbereich möglich, wodurch auch eine genaue Kompensation des Rangewalk-Fehlers ermöglicht wird.

Damit die Empfangsstrahlung gleichmässig auf die einzelnen Mikrozellen 33 verteilt wird, kann der einfallende Lichtfleck 34 beispielsweise mittels eines Diffusors, faseroptischen Lichtleiterstabs, Vierkantfaser, Lichttrichters oder mittels Defokussierung bereitgestellt werden. Insbesondere bieten sich als Lichtmischer besonders Lichtleiter an, weil durch diese kein Licht verloren geht.

Einerseits ist man beispielsweise an einer möglichst gleichmässigen Licht-Verteilung interessiert, da sich dann der SPAD-Array ähnlich wie eine APD im Linear-Modus verhält.

Andererseits zeigen SPAD-Arrays ein sogenanntes Fehlrichtdiagramm, wobei die Laufzeit der Signalantwort abhängig ist von der Position des Lichtflecks 34. Die Mikrozellen am Rand des SPAD-Arrays sind langsamer als in der Mitte. Durch eine gleichmässige Beleuchtung aller Mikrozellen kann dieser Laufzeiteffekt herausgemittelt werden.

**Figur 12** zeigt eine Variante wie das Empfangslicht möglichst definiert homogen auf den SPAD-Array 18 verteilt werden kann. Es ist das Ziel möglichst alle Mikrozellen eines SPAD-Arrays 18 auszuleuchten und dies unabhängig von der Distanz des Zielobjekts. Besonders geeignet und auch bekannt aus bisherigen APDs sind optische Multimodelichtleiter aus Glas, Quarz oder Kunststoff. Mittels eines Modenscramblers wird am Ausgang eines Multimodelichtleiters eine besonders homogene Lichtverteilung erreicht. Das Faserende kann mit optischer Abbildung auf die Fläche eines SPAD-Arrays abgebildet werden, das Licht kann aber auch in kurzem Abstand auf die sensitive Fläche direkt gekoppelt werden.

Die Figur zeigt eine spezielle Ausführungsform eines Lichtleiters als Vierkantfaser 44 mit mattierter Eintrittsfläche 47. Die Mattierung erzeugt eine gleichmässige Ausleuchtung des Faserquerschnitts und der Lichtleiter in Richtung SPAD-Array 18 vermischt durch kaleidoskopische Spiegelung zusätzlich das optische Signal und schliesst dieses gleichzeitig durch optische Wellenleitung im Bereich der Querschnittsfläche ein. Am Austrittsende der Vierkantfaser 44 ist somit eine homogene Lichtverteilung über den SPAD-Array 18 gewährleistet. Die Vierkantfaser 44 selber ist wie ein Multimodelichtleiter aufgebaut, bestehend aus einem Kernbereich 45 und einem optischen Cladding 46. Das optische Cladding 46 bewirkt, dass Strahlung mit Ausbreitungsrichtung innerhalb der numerischen Apertur den Wellenleiter nicht seitlich verlassen kann.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Distanzmesser (1), insbesondere zur Verwendung in einem handgehaltenen Distanzmessgerät, Lasertracker, Tachymeter, Laserscanner, LIDAR-Messgerät oder Profiler, für eine Bestimmung einer Distanz zu einem Ziel (5) mit
• einer Strahlungsquelle (2,16) zur Erzeugung einer Sendestrahlung, insbesondere gepulste Lasermessstrahlung oder Superlumineszenz-LED-Strahlung,
• einem Sendepfad zum Aussenden von zumindest einem Teil (4,17) der Sendestrahlung zum Ziel (5),
• einem Empfangspfad mit einem Empfänger (3) der konfiguriert ist zum Erfassen eines Empfangssignals (14,14') basierend auf zumindest einem Teil der vom Ziel zurückkommenden Sendestrahlung, und
• einer Recheneinheit (28) die konfiguriert ist zum Ableiten der Distanz zum Ziel basierend auf dem Empfangssignal (14,14'), wobei
• der Empfänger (3) zum Erfassen des Empfangssignals (14,14') einen optoelektronischen Sensor basierend auf einer SPAD-Anordnung (18,18A,18B,18') aufweist, wobei die SPAD-Anordnung eine Vielzahl von jeweils für einen Avalanche-Mechanismus konfigurierten Mikrozellen aufweist und die Mikrozellen parallel zu einem oder mehreren Ausgangssignalen geschaltet sind,
• die Recheneinheit (28) konfiguriert ist um basierend auf dem Empfangssignal (14,14') einen Signaturparameter abzuleiten, wobei dem Signaturparameter eine Information bezüglich einer Signatur des Signalverlaufs des Empfangssignals (14,14') anhaftet, insbesondere wobei der Signatur eine Information bezüglich einer kennlinienspezifischen Triggerung der Mikrozellen der SPAD-Anordnung anhaftet, und
wobei
• auf der Recheneinheit (28) ferner eine Distanzkorrektur-Information, insbesondere als Funktion oder Lookup-Tabelle (29), hinterlegt ist bezüglich beim Ableiten der Distanz auftretender und vom Signalverlauf des Empfangssignals (14,14') abhängiger Distanzoffsets, und
• die Recheneinheit (28), basierend auf dem abgeleiteten Signaturparameter und der Distanzkorrektur-Information, beim Ableiten der Distanz einen Distanzoffset berücksichtigt,
**dadurch gekennzeichnet, dass** der Empfangspfad einen Lichtmischer zur Lichtmischung aufweist, konfiguriert um zurückkommende Teile der Sendestrahlung gleichmäßig auf alle Mikrozellen der SPAD-Anordnung (18, 18A,18B,18') zu verteilen.

2. Distanzmesser (1) nach Anspruch 1,
**dadurch gekennzeichnet, dass**
die Lichtmischung auf mindestens einem von einem Diffusor, einem faseroptischen Lichtleiterstab, einem Lichtleiter mit Scrambler, einer Lichtleitfaser, einer Vierkantfaser, einem Lichttrichter, einer Blende, und einer Defokussierung basiert.

3. Distanzmesser (1) nach Anspruch 1 oder 2,
**dadurch gekennzeichnet, dass**
die SPAD-Anordnung (18,18A,18B,18') derart konfiguriert ist, dass die Mikrozellen (33) einzeln und/oder in Mikrozellengruppen auslesbar sind, wobei die SPAD-Anordnung (18, 18A, 18B, 18') derart konfiguriert ist, dass
• ein erster Satz von einzeln auslesbaren Teilbereichen (L) der SPAD-Anordnung definiert ist, wobei die Teilbereiche des ersten Satzes von Teilbereichen jeweils derart konfiguriert sind, dass sie in einem linearen Erfassungsmodus unterhalb der Durchbruchspannung betrieben werden, und dass
• ein zweiter Satz von einzeln auslesbaren Teilbereichen (S) der SPAD-Anordnung (18,18A,18B,18') definiert ist, und die Teilbereiche des zweiten Satzes von Teilbereichen jeweils derart konfiguriert sind, dass sie in einem Overbreakmodus über der Durchbruchspannung betrieben werden.

4. Distanzmesser (1), insbesondere zur Verwendung in einem handgehaltenen Distanzmessgerät, Lasertracker, Tachymeter, Laserscanner, LIDAR-Messgerät oder Profiler, für eine Bestimmung einer Distanz zu einem Ziel (5) mit
• einer Strahlungsquelle (2,16) zur Erzeugung einer Sendestrahlung, insbesondere gepulste Lasermessstrahlung oder Superlumineszenz-LED-Strahlung,
• einem Sendepfad zum Aussenden von zumindest einem Teil (4,17) der Sendestrahlung zum Ziel (5),
• einem Empfangspfad mit einem Empfänger (3) der konfiguriert ist zum Erfassen eines Empfangssignals (14,14') basierend auf zumindest einem Teil der vom Ziel zurückkommenden Sendestrahlung, und
• einer Recheneinheit (28) die konfiguriert ist zum Ableiten der Distanz zum Ziel basierend auf dem Empfangssignal (14,14'), wobei
• der Empfänger (3) zum Erfassen des Empfangssignals (14,14') einen optoelektronischen Sensor basierend auf einer SPAD-Anordnung (18, 18A, 18B, 18') aufweist, wobei die SPAD-Anordnung eine Vielzahl von jeweils für einen Avalanche-Mechanismus konfigurierten Mikrozellen aufweist und die Mikrozellen parallel zu einem oder mehreren Ausgangssignalen geschaltet sind,
• die SPAD-Anordnung (18,18A,18B,18') derart konfiguriert ist, dass die Mikrozellen (33) einzeln und/oder in Mikrozellengruppen auslesbar sind,
• die Recheneinheit (28) konfiguriert ist um basierend auf dem Empfangssignal (14,14') einen Signaturparameter abzuleiten, wobei dem Signaturparameter eine Information bezüglich einer Signatur des Signalverlaufs des
Empfangssignals (14,14') anhaftet, insbesondere wobei der Signatur eine Information bezüglich einer kennlinienspezifischen Triggerung der Mikrozellen der SPAD-Anordnung anhaftet,
wobei
• auf der Recheneinheit (28) ferner eine Distanzkorrektur-Information, insbesondere als Funktion oder Lookup-Tabelle (29), hinterlegt ist bezüglich beim Ableiten der Distanz auftretender und vom Signalverlauf des Empfangssignals (14,14') abhängiger Distanzoffsets, und
• die Recheneinheit (28), basierend auf dem abgeleiteten Signaturparameter und der Distanzkorrektur-Information, beim Ableiten der Distanz einen Distanzoffset berücksichtigt,
**dadurch gekennzeichnet, dass** die SPAD-Anordnung (18,18A,18B, 18') derart konfiguriert ist, dass
ein erster Satz von einzeln auslesbaren Teilbereichen (L) der SPAD-Anordnung definiert ist, wobei die Teilbereiche des ersten Satzes von Teilbereichen jeweils derart konfiguriert sind, dass sie in einem linearen Erfassungsmodus unterhalb der Durchbruchspannung betrieben werden, und dass
ein zweiter Satz von einzeln auslesbaren Teilbereichen (S) der SPAD-Anordnung (18,18A,18B,18') definiert ist, und die Teilbereiche des zweiten Satzes von Teilbereichen jeweils derart konfiguriert sind, dass sie in einem Overbreakmodus über der Durchbruchspannung betrieben werden.

5. Distanzmesser (1) nach einem der vorhergehenden Ansprüche,
**dadurch gekennzeichnet, dass**
der Signaturparameter mindestens eines von folgendem umfasst:
• eine Signalamplitude des Empfangssignals (14,14'),
• ein Kurvenmaximum des Empfangssignals (14,14'),
• einen Wendepunkt des Empfangssignals (14,14'),
• einen Maximalwert der Steigung des Empfangssignals (14,14'),
• einen Maximalwert der Krümmung des Empfangssignals (14,14'),
• eine Pulsbreite eines durch das Empfangssignal (14,14') repräsentierten Pulses,
• eine Pulsform eines durch das Empfangssignal (14,14') repräsentierten Pulses, insbesondere wobei die Pulsform mittels Spline-Interpolation oder eines Resampling-Algorithmus abgeleitet wird,
insbesondere wobei die Distanzkorrektur-Information ein beim Ableiten der Distanz verwendeter und vom Signalverlauf des Empfangssignals (14,14') abhängiger Zeitoffset eines Zeitwerts bezüglich eines Empfangszeitpunkts des Empfangssignals (14,14') ist, welcher beim Ableiten der Distanz dem Signaturparameter funktional gegenüber gestellt wird.

6. Distanzmesser (1) nach einem der vorhergehenden Ansprüche,
**dadurch gekennzeichnet, dass**
die Distanzkorrektur-Information eine Form-Information bezüglich einer von der Photostromdichte der Empfangsstrahlung abhängigen Signalform des Empfangssignals (14,14') bereitstellt, insbesondere bezüglich einer von der Photostromdichte der Empfangsstrahlung abhängigen zeitlichen Verschiebung eines Kurvenmaximums des Empfangssignals (14,14').

7. Distanzmesser (1) nach einem der vorhergehenden Ansprüche,
**dadurch gekennzeichnet, dass**
die Recheneinheit (28) konfiguriert ist um
• basierend auf einem Passieren eines Schwellwerts durch das Empfangssignal (14,14') einen Zeitwert bezüglich eines Empfangszeitpunkts des Empfangssignals (14,14') abzuleiten, und um
• basierend auf der Distanzkorrektur-Information und des Signaturparameters, insbesondere der Amplitude, des Empfangssignals (14,14') einen beim Ableiten des Zeitwerts auftretenden Zeitoffset des Zeitwerts zum tatsächlichen Empfangszeitpunkt des durch den Zeitwert erfassten Empfangssignals (14,14') abzuleiten,
wobei die Recheneinheit (28) beim Ableiten des Zeitwerts den Zeitoffset berücksichtigt.

8. Distanzmesser (1) nach einem der vorhergehenden Ansprüche,
**dadurch gekennzeichnet, dass**
die Distanzkorrektur-Information mindestens eines von folgendem umfasst
• eine Lookup-Tabelle (29) die eine Korrelation zwischen Werten eines für das Ableiten der Distanz verwendeten Parameters, insbesondere ein Zeitoffset oder ein Distanzoffset, und Werten des Signaturparameters, insbesondere Amplitudenwerten, des Empfangssignals (14,14') ermöglicht, und
• eine Funktion, welche basierend auf Werten des Signaturparameters, insbesondere Amplitudenwerten, des Empfangssignals (14,14') als Funktionsparameter Werte eines für das Ableiten der Distanz verwendeten Parameters, insbesondere ein Zeitoffset oder ein Distanzoffset, ausgibt.

9. Distanzmesser (1) nach einem der vorhergehenden Ansprüche,
**dadurch gekennzeichnet, dass**
der Distanzmesser (1) eine Empfangsschaltung mit einem Differenzierer (19) aufweist, insbesondere einem elektrischen Hochpass-Filter.

10. Distanzmesser (1) nach einem der vorhergehenden Ansprüche,
**dadurch gekennzeichnet, dass**
der Distanzmesser (1) eine Empfangsschaltung aufweist, die konfiguriert ist für eine Verarbeitung des Empfangssignals (14,14') und zur Bereitstellung von mindestens einem von folgendem:
• eine Wellenform-Digitalisierung des Empfangssignals (14,14') mit sub-Picosekunden genauer Zeitauflösung,
• eine Zeitmessschaltung mit einem Zeit-Digital-Konverter (23), und
• eine Phasenmessung des Empfangssignals (14,14') bezüglich eines durch die Sendestrahlung bereitgestellten Sendesignals (17).

11. Distanzmesser (1) nach Anspruch 10,
**dadurch gekennzeichnet, dass**
die Empfangsschaltung und die Recheneinheit (28) derart konfiguriert sind, dass die Amplitude des Empfangssignals (14,14') basierend auf mindestens einem von folgendem abgeleitet wird:
• einem Kurvenmaximum des Empfangssignals (14,14'),
• einem Wendepunkt des Empfangssignals (14,14'),
• einem Maximalwert der Steigung des Empfangssignals (14,14'),
• einem Maximalwert der Krümmung des Empfangssignals (14,14'),
• einer Krümmungsdifferenz bezüglich zwei Positionen in der steigenden und/oder der fallenden Flanke des Empfangssignals (14,14'),
• einer Pulsbreite eines durch das Empfangssignal (14,14') repräsentierten Pulses,
• einer Pulsform eines durch das Empfangssignal (14,14') repräsentierten Pulses, insbesondere wobei die Pulsform mittels Spline-Interpolation oder eines Resampling-Algorithmus abgeleitet wird.

12. Distanzmesser (1) nach einem der vorhergehenden Ansprüche,
**dadurch gekennzeichnet, dass**
die SPAD-Anordnung (18,18A,18B,18') derart konfiguriert ist, dass sie mindestens eine der folgenden Eigenschaften aufweist:
• eine Photosensitivität für Wellenlängen zwischen 300 nm bis 1100 nm, insbesondere wobei die SPAD-Anordnung (18,18A,18B,18') auf einem Silizium-Empfänger basiert,
• eine Photosensitivität für Wellenlängen zwischen 700 nm bis 2000 nm, insbesondere wobei die SPAD-Anordnung (18,18A,18B,18') auf einem InGaAs-, Ge-, PbSe- oder MCT-Empfänger basiert, und
• einen Overbreak-Betriebsmodus.

13. Distanzmesser (1) nach einem der vorhergehenden Ansprüche,
**dadurch gekennzeichnet, dass**
die Strahlungsquelle (2,16) konfiguriert ist um die Sendestrahlung als gepulste Lasermessstrahlung (17) bereitzustellen, insbesondere mit einer einzelnen Pulsdauer von weniger als 600 Pikosekunden.

14. Distanzmesser (1) nach einem der Ansprüche 3 oder 4,
• ein dritter Satz von einzeln auslesbaren Teilbereichen der SPAD-Anordnung definierbar ist,
• die Recheneinheit (28) konfiguriert ist zur Steuerung des Empfängers (3) basierend auf einem vorprogrammierten Messablauf für das Erfassen des Empfangssignals (14,14'),
• wobei der Messablauf das Erfassen des Empfangssignals (14,14') mittels einer definierten zeitlichen Abfolge von Auslesungen einzelner Teilbereiche des dritten Satzes von Teilbereichen definiert.

15. Distanzmesser (1) nach einem der vorhergehenden Ansprüche,
**dadurch gekennzeichnet, dass**
der Empfänger (3) mehrere SPAD-Anordnungen (18,18A,18B,18') aufweist, wobei die mehreren SPAD-Anordnungen eindimensional oder zweidimensional zueinander angeordnet sind, insbesondere wobei jede SPAD-Anordnung eine separate Ansteuerelektronik und/oder Auswerteelektronik aufweist.

## Claims

1. Distance measuring device (1), in particular for use in a handheld distance measuring instrument, laser tracker, tachymeter, laser scanner, LIDAR measuring instrument or profiler, for determining a distance to a target (5) comprising
• a radiation source (2, 16) for generating a transmission radiation, in particular pulsed laser measurement radiation or superluminescence LED radiation,
• a transmission path for emitting at least one part (4, 17) of the transmission radiation to the target (5),
• a reception path comprising a receiver (3) configured for detecting a reception signal (14, 14') on the basis of at least one part of the transmission radiation returning from the target, and
• a computing unit (28) configured for deriving the distance to the target on the basis of the reception signal (14, 14'),
wherein
• the receiver (3) comprises, for detecting the reception signal (14, 14'), an optoelectronic sensor based on a SPAD array (18, 18A, 18B, 18'), the SPAD array having a multiplicity of microcells each configured for an avalanche mechanism, and the microcells being connected in parallel to one or more output signals,
• the computing unit (28) is configured to derive a signature parameter on the basis of the reception signal (14, 14'), wherein information regarding a signature of the signal profile of the reception signal (14, 14') is associated with the signature parameter, in particular wherein information regarding a characteristic-curve-specific triggering of the microcells of the SPAD array is associated with the signature, and
wherein
• on the computing unit (28), furthermore, distance correction information, in particular as a function or a lookup table (29), is stored regarding distance offsets which occur when deriving the distance and are dependent on the signal profile of the reception signal (14, 14'), and
• the computing unit (28), on the basis of the derived signature parameter and the distance correction information, takes account of a distance offset when deriving the distance,
**characterized in that** the reception path has a light mixer for light mixing, configured to distribute returning parts of the transmission radiation uniformly over all microcells of the SPAD array (18, 18A, 18B, 18 ').

2. Distance measuring device (1) according to Claim 1,
**characterized in that**
the light mixing is based on at least one of a diffuser, a fiber-optic optical waveguide rod, an optical waveguide with scrambler, an optical fiber, a square fiber, a light funnel, a diaphragm, and a defocusing.

3. Distance measuring device (1) according to Claim 1 or 2,
**characterized in that**
the SPAD array (18, 18A, 18B, 18') is configured in such a way that the microcells (33) are readable individually and/or in microcell groups, wherein the SPAD array (18, 18A, 18B, 18') is configured in such a way that
• a first set of individually readable partial regions (L) of the SPAD array is defined, wherein the partial regions of the first set of partial regions are configured in each case in such a way that they are operated in a linear detection mode below the breakdown voltage, and that
• a second set of individually readable partial regions (S) of the SPAD array (18, 18A, 18B, 18') is defined, and the partial regions of the second set of partial regions are configured in each case in such a way that they are operated in an overbreak mode above the breakdown voltage.

4. Distance measuring device (1), in particular for use in a handheld distance measuring instrument, laser tracker, tachymeter, laser scanner, LIDAR measuring instrument or profiler, for determining a distance to a target (5) comprising
• a radiation source (2, 16) for generating a transmission radiation, in particular pulsed laser measurement radiation or superluminescence LED radiation,
• a transmission path for emitting at least one part (4, 17) of the transmission radiation to the target (5),
• a reception path comprising a receiver (3) configured for detecting a reception signal (14, 14') on the basis of at least one part of the transmission radiation returning from the target, and
• a computing unit (28) configured for deriving the distance to the target (s) on the basis of the reception signal (14, 14'),
wherein
• the receiver (3) comprises, for detecting the reception signal (14, 14'), an optoelectronic sensor based on a SPAD array (18, 18A, 18B, 18'), the SPAD array having a multiplicity of microcells each configured for an avalanche mechanism, and the microcells being connected in parallel to one or more output signals,
• the SPAD array (18, 18A, 18B, 18') is configured in such a way that the microcells (33) are readable individually and/or in microcell groups,
• the computing unit (28) is configured to derive a signature parameter on the basis of the reception signal (14, 14'), wherein information regarding a signature of the signal profile of the reception signal (14, 14') is associated with the signature parameter, in particular wherein information regarding a characteristic-curve-specific triggering of the microcells of the SPAD array is associated with the signature,
wherein
• on the computing unit (28), furthermore, distance correction information, in particular as a function or a lookup table (29), is stored regarding distance offsets which occur when deriving the distance and are dependent on the amplitude of the reception signal (14, 14'), and
• the computing unit (28), on the basis of the derived signature parameter and the distance correction information, takes account of a distance offset when deriving the distance,
**characterized in that** the SPAD array (18, 18A, 18B, 18') is configured in such a way that
• a first set of individually readable partial regions (L) of the SPAD array is defined, wherein the partial regions of the first set of partial regions are configured in each case in such a way that they are operated in a linear detection mode below the breakdown voltage, and that
• a second set of individually readable partial regions (S) of the SPAD array (18, 18A, 18B, 18') is defined, and the partial regions of the second set of partial regions are configured in each case in such a way that they are operated in an overbreak mode above the breakdown voltage.

5. Distance measuring device (1) according to any one of the preceding Claims,
**characterized in that**
the signature parameter comprises at least one of the following:
• a signal amplitude of the reception signal (14, 14'),
• a curve maximum of the reception signal (14, 14'),
• a point of inflection of the reception signal (14, 14'),
• a maximum value of the gradient of the reception signal (14, 14'),
• a maximum value of the curvature of the reception signal (14, 14'),
• a pulse width of a pulse represented by the reception signal (14, 14'),
• a pulse shape of a pulse represented by the reception signal (14, 14'), in particular wherein the pulse shape is derived by means of spline interpolation or a resampling algorithm,
in particular wherein the distance correction information is a time offset - used when deriving the distance and dependent on the signal profile of the reception signal (14, 14') - of a time value with respect to a point in time of reception of the reception signal (14, 14'), which is functionally compared with the signature parameter when deriving the distance.

6. Distance measuring device (1) according to any one of the preceding claims,
**characterized in that**
the distance correction information provides shape information regarding a signal shape of the reception signal (14, 14'), said signal shape being dependent on the photocurrent density of the reception radiation, in particular regarding a temporal shift of a curve maximum of the reception signal (14, 14'), said temporal shift being dependent on the photocurrent density of the reception radiation.

7. Distance measuring device (1) according to any one of the preceding claims,
**characterized in that**
the computing unit (28) is configured
• to derive, on the basis of a threshold value being passed by the reception signal (14, 14'), a time value with respect to a point in time of reception of the reception signal (14, 14'), and
• to derive, on the basis of the distance correction information and the signature parameter, in particular the amplitude, of the reception signal (14, 14'), a time offset - occurring when deriving the time value - of the time value with respect to the actual point in time of reception of the reception signal (14, 14') detected by means of the time value,
wherein the computing unit (28) takes account of the time offset when deriving the time value.

8. Distance measuring device (1) according to any one of the preceding claims,
**characterized in that**
the distance correction information comprises at least one of the following
• a lookup table (29) which enables a correlation between values of a parameter used for deriving the distance, in particular a time offset or a distance offset, and values of the signature parameter, in particular amplitude values, of the reception signal (14, 14'), and
• a function which outputs on the basis of values of the signature parameter, in particular amplitude values, of the reception signal (14, 14') as function parameter values of a parameter used for deriving the distance, in particular a time offset or a distance offset.

9. Distance measuring device (1) according to any one of the preceding claims,
**characterized in that**
the distance measuring device (1) comprises a reception circuit having a differentiator (19), in particular an electrical high-pass filter.

10. Distance measuring device (1) according to any one of the preceding claims,
**characterized in that**
the distance measuring device (1) comprises a reception circuit configured for processing the reception signal (14, 14') and for providing at least one of the following:
• waveform digitizing of the reception signal (14, 14') with time resolution having sub-picosecond accuracy,
• a time measuring circuit having a time-to-digital converter (23), and
• a phase measurement of the reception signal (14, 14') with respect to a transmission signal (17) provided by the transmission radiation.

11. Distance measuring device (1) according to Claim 10,
**characterized in that**
the reception circuit and the computing unit (28) are configured in such a way that the amplitude of the reception signal (14, 14') is derived on the basis of at least one of the following:
• a curve maximum of the reception signal (14, 14'),
• a point of inflection of the reception signal (14, 14'),
• a maximum value of the gradient of the reception signal (14, 14'),
• a maximum value of the curvature of the reception signal (14, 14'),
• a difference in curvature with respect to two positions in the rising and/or the falling edge of the reception signal (14, 14'),
• a pulse width of a pulse represented by the reception signal (14, 14'),
• a pulse shape of a pulse represented by the reception signal (14, 14'), in particular wherein the pulse shape is derived by means of spline interpolation or a resampling algorithm.

12. Distance measuring device (1) according to any one of the preceding claims,
**characterized in that**
the SPAD array (18, 18A, 18B, 18') is configured in such a way that it has at least one of the following properties:
• a photosensitivity for wavelengths between 300 nm and 1100 nm, in particular wherein the SPAD array (18, 18A, 18B, 18') is based on a silicon receiver,
• a photosensitivity for wavelengths between 700 nm and 2000 nm, in particular wherein the SPAD array (18, 18A, 18B, 18') is based on an InGaAs, Ge, PbSe or MCT receiver, and
• an overbreak operating mode.

13. Distance measuring device (1) according to any one of the preceding claims,
**characterized in that**
the radiation source (2, 16) is configured to provide the transmission radiation as pulsed laser measurement radiation (17), in particular having an individual pulse duration of less than 600 picoseconds.

14. Distance measuring device (1) according to any one of claims 3 or 4,
**characterized in that**
• a third set of individually readable partial regions of the SPAD array is definable,
• the computing unit (28) is configured for controlling the receiver (3) on the basis of a preprogrammed measurement sequence for detecting the reception signal (14, 14'),
• wherein the measurement sequence defines the detection of the reception signal (14, 14') by means of a defined temporal sequence of read-outs of individual partial regions of the third set of partial regions.

15. Distance measuring device (1) according to any one of the preceding claims,
**characterized in that**
the receiver (3) comprises a plurality of SPAD arrays (18, 18A, 18B, 18'), wherein the plurality of SPAD arrays are arranged one-dimensionally or two-dimensionally with respect to one another, in particular wherein each SPAD array comprises separate drive electronics and/or evaluation electronics.

## Revendications

1. Distancemètre (1), en particulier pour une utilisation dans un appareil de mesure de distance portatif, un laser tracker, un tachymètre, un scanner laser, un appareil de mesure LIDAR ou un profileur, pour déterminer une distance par rapport à une cible (5), comprenant
• une source de rayonnement (2, 16) pour générer un rayonnement d'émission, en particulier un rayonnement de mesure laser pulsé ou un rayonnement de LED superluminescentes,
• un trajet d'émission pour envoyer au moins une partie (4, 17) du rayonnement d'émission vers la cible (5),
• un trajet de réception comprenant un récepteur (3) configuré pour détecter un signal de réception (14, 14') sur la base d'au moins une partie du rayonnement d'émission revenant de la cible, et
• une unité de calcul (28) configurée pour dériver la distance par rapport à la cible sur la base du signal de réception (14, 14'),
dans lequel
• le récepteur (3) pour détecter le signal de réception (14, 14') présente un capteur optoélectronique basé sur un agencement de SPAD (18, 18A, 18B, 18'), dans lequel l'agencement de SPAD présente une pluralité de microcellules configurées chacune pour un mécanisme d'avalanche et les microcellules sont connectées en parallèle à un ou plusieurs signaux de sortie,
• l'unité de calcul (28) est configurée pour dériver un paramètre de signature sur la base du signal de réception (14, 14'), dans lequel une information relative à une signature de la courbe de signal du signal de réception (14, 14') est attachée au paramètre de signature, en particulier dans lequel une information relative à un déclenchement spécifique à une courbe caractéristique des microcellules de l'agencement de SPAD est attachée à la signature, et
dans lequel
• une information de correction de distance, en particulier sous la forme d'une fonction ou d'une table de consultation (29), est en outre stockée sur l'unité de calcul (28) concernant des décalages de distance qui se produisent lors de la dérivation de la distance et dépendent de la courbe de signal du signal de réception (14, 14'), et
• l'unité de calcul (28) tient compte, lors de la dérivation de la distance, d'un décalage de distance sur la base du paramètre de signature dérivé et de l'information de correction de distance,
**caractérisé en ce que**
le trajet de réception présente un mélangeur de lumière pour le mélange de lumière, configuré pour répartir uniformément sur toutes les microcellules de l'agencement de SPAD (18, 18A, 18B, 18') les parties du rayonnement d'émission qui reviennent.

2. Distancemètre (1) selon la revendication 1,
**caractérisé en ce que**
le mélange de lumière est basé sur au moins un élément parmi un diffuseur, un barreau conducteur de lumière à fibre optique, un conducteur de lumière avec brouilleur, une fibre conductrice de lumière, une fibre carrée, un entonnoir de lumière, un obturateur et une défocalisation.

3. Distancemètre (1) selon la revendication 1 ou 2,
**caractérisé en ce que**
l'agencement de SPAD (18, 18A, 18B, 18') est configuré de telle sorte que les microcellules (33) sont lisibles individuellement et/ou par groupes de microcellules, l'agencement de SPAD (18, 18A, 18B, 18') étant configuré de telle sorte que
• un premier ensemble de zones partielles (L) lisibles individuellement de l'agencement de SPAD est défini, les zones partielles du premier ensemble de zones partielles étant chacune configurées de telle sorte qu'elles fonctionnent dans un mode de détection linéaire en dessous de la tension de claquage, et que
• un deuxième ensemble de zones partielles (S) lisibles individuellement de l'agencement de SPAD (18, 18A, 18B, 18') est défini, et les zones partielles du deuxième ensemble de zones partielles sont chacune configurées de telle sorte qu'elles fonctionnent dans un mode de sur-claquage (overbreak) au-dessus de la tension de claquage.

4. Distancemètre (1), en particulier pour une utilisation dans un appareil de mesure de distance portatif, un laser tracker, un tachymètre, un scanner laser, un appareil de mesure LIDAR ou un profileur, pour déterminer une distance par rapport à une cible (5), comprenant
• une source de rayonnement (2, 16) pour générer un rayonnement d'émission, en particulier un rayonnement de mesure laser pulsé ou un rayonnement de LED superluminescentes,
• un trajet d'émission pour envoyer au moins une partie (4, 17) du rayonnement d'émission vers la cible (5),
• un trajet de réception comprenant un récepteur (3) configuré pour détecter un signal de réception (14, 14') sur la base d'au moins une partie du rayonnement d'émission revenant de la cible, et
• une unité de calcul (28) configurée pour dériver la distance par rapport à la cible sur la base du signal de réception (14, 14'),
dans lequel
• le récepteur (3) pour détecter le signal de réception (14, 14') présente un capteur optoélectronique basé sur un agencement de SPAD (18, 18A, 18B, 18'), dans lequel l'agencement de SPAD présente une pluralité de microcellules configurées chacune pour un mécanisme d'avalanche et les microcellules sont connectées en parallèle à un ou plusieurs signaux de sortie,
• l'agencement de SPAD (18, 18A, 18B, 18') est configuré de telle sorte que les microcellules (33) sont lisibles individuellement et/ou par groupes de microcellules,
• l'unité de calcul (28) est configurée pour dériver un paramètre de signature sur la base du signal de réception (14, 14'), dans lequel une information relative à une signature de la courbe de signal du signal de réception (14, 14') est attachée au paramètre de signature, en particulier dans lequel une information relative à un déclenchement spécifique à une courbe caractéristique des microcellules de l'agencement de SPAD est attachée à la signature,
dans lequel
• une information de correction de distance, en particulier sous la forme d'une fonction ou d'une table de consultation (29), est en outre stockée sur l'unité de calcul (28) concernant des décalages de distance qui se produisent lors de la dérivation de la distance et dépendent de la courbe de signal du signal de réception (14, 14'), et
• l'unité de calcul (28) tient compte, lors de la dérivation de la distance, d'un décalage de distance sur la base du paramètre de signature dérivé et de l'information de correction de distance,
**caractérisé en ce que**
l'agencement de SPAD (18, 18A, 18B, 18') est configuré de telle sorte qu'un premier ensemble de zones partielles (L) lisibles individuellement de l'agencement de SPAD est défini, les zones partielles du premier ensemble de zones partielles étant chacune configurées de telle sorte qu'elles fonctionnent dans un mode de détection linéaire en dessous de la tension de claquage, et
qu'un deuxième ensemble de zones partielles (S) lisibles individuellement de l'agencement de SPAD (18, 18A, 18B, 18') est défini, et les zones partielles du deuxième ensemble de zones partielles sont chacune configurées de telle sorte qu'elles fonctionnent dans un mode de sur-claquage (overbreak) au-dessus de la tension de claquage.

5. Distancemètre (1) selon l'une des revendications précédentes,
**caractérisé en ce que**
le paramètre de signature comprend au moins l'un des éléments suivants :
• une amplitude de signal du signal de réception (14, 14'),
• un maximum de courbe du signal de réception (14, 14'),
• un point d'inflexion du signal de réception (14, 14'),
• une valeur maximale de la pente du signal de réception (14, 14'),
• une valeur maximale de la courbure du signal de réception (14, 14'),
• une largeur d'impulsion d'une impulsion représentée par le signal de réception (14, 14'),
• une forme d'impulsion d'une impulsion représentée par le signal de réception (14, 14'), en particulier dans lequel la forme d'impulsion est dérivée au moyen d'une interpolation par spline ou d'un algorithme de rééchantillonnage,
en particulier dans lequel l'information de correction de distance est un décalage de temps, utilisé lors de la dérivation de la distance et dépendant de la forme du signal de réception (14, 14'), d'une valeur de temps par rapport à un instant de réception du signal de réception (14, 14'), lequel décalage de temps est comparé fonctionnellement au paramètre de signature lors de la dérivation de la distance.

6. Distancemètre (1) selon l'une des revendications précédentes,
**caractérisé en ce que**
l'information de correction de distance fournit une information de forme relative à une forme de signal du signal de réception (14, 14') dépendant de la densité de courant photonique du rayonnement de réception, en particulier relative à un décalage dans le temps d'un maximum de courbe du signal de réception (14, 14') dépendant de la densité de courant photonique du rayonnement de réception.

7. Distancemètre (1) selon l'une des revendications précédentes,
**caractérisé en ce que**
l'unité de calcul (28) est configurée pour
• dériver, sur la base d'un dépassement d'une valeur seuil par le signal de réception (14, 14'), une valeur de temps relative à un instant de réception du signal de réception (14, 14'), et pour
• dériver, sur la base de l'information de correction de distance et du paramètre de signature, en particulier de l'amplitude, du signal de réception (14, 14'), un décalage de temps de la valeur de temps se produisant lors de la dérivation de la valeur de temps par rapport à l'instant réel de réception du signal de réception (14, 14') détectée par la valeur de temps,
dans lequel l'unité de calcul (28) tient compte du décalage de temps lors de la dérivation de la valeur de temps.

8. Distancemètre (1) selon l'une des revendications précédentes,
**caractérisé en ce que**
l'information de correction de distance comprend au moins l'un des éléments suivants :
• une table de consultation (29) qui permet une corrélation entre des valeurs d'un paramètre utilisé pour la dérivation de la distance, en particulier un décalage de temps ou un décalage de distance, et des valeurs du paramètre de signature, en particulier des valeurs d'amplitude, du signal de réception (14, 14'), et
• une fonction qui, sur la base de valeurs du paramètre de signature, en particulier de valeurs d'amplitude, du signal de réception (14, 14'), délivre comme paramètres de fonction des valeurs d'un paramètre utilisé pour la dérivation de la distance, en particulier un décalage de temps ou un décalage de distance.

9. Distancemètre (1) selon l'une des revendications précédentes,
**caractérisé en ce que**
le distancemètre (1) présente un circuit de réception avec un différenciateur (19), en particulier un filtre passe-haut électrique.

10. Distancemètre (1) selon l'une des revendications précédentes,
**caractérisé en ce que**
le distancemètre (1) présente un circuit de réception qui est configuré pour traiter le signal de réception (14, 14') et pour fournir au moins l'un des éléments suivants :
• une numérisation de la forme d'onde du signal de réception (14, 14') avec une résolution temporelle d'une précision de l'ordre de la sous-picoseconde,
• un circuit de mesure du temps comprenant un convertisseur temps-numérique (23) et
• une mesure de phase du signal de réception (14, 14') par rapport à un signal d'émission (17) fourni par le rayonnement d'émission.

11. Distancemètre (1) selon la revendication 10,
**caractérisé en ce que**
le circuit de réception et l'unité de calcul (28) sont configurés de telle sorte que l'amplitude du signal de réception (14, 14') est dérivée sur la base d'au moins l'un des éléments suivants :
• un maximum de courbe du signal de réception (14, 14'),
• un point d'inflexion du signal de réception (14, 14'),
• une valeur maximale de la pente du signal de réception (14, 14'),
• une valeur maximale de la courbure du signal de réception (14, 14'),
• une différence de courbure par rapport à deux positions dans le front montant et/ou descendant du signal de réception (14, 14'),
• une largeur d'impulsion d'une impulsion représentée par le signal de réception (14, 14'),
• une forme d'impulsion d'une impulsion représentée par le signal de réception (14, 14'), en particulier dans lequel la forme d'impulsion est dérivée au moyen d'une interpolation par spline ou d'un algorithme de rééchantillonnage.

12. Distancemètre (1) selon l'une des revendications précédentes,
**caractérisé en ce que**
l'agencement de SPAD (18, 18A, 18B, 18') est configuré de telle sorte qu'il présente au moins l'une des caractéristiques suivantes :
• une photosensibilité pour des longueurs d'onde comprises entre 300 nm et 1100 nm, en particulier dans lequel l'agencement de SPAD (18, 18A, 18B, 18') est basé sur un récepteur en silicium,
• une photosensibilité pour des longueurs d'onde comprises entre 700 nm et 2000 nm, en particulier dans lequel l'agencement de SPAD (18, 18A, 18B, 18') est basé sur un récepteur InGaAs, Ge, PbSe ou MCT et
• un mode de fonctionnement en sur-claquage.

13. Distancemètre (1) selon l'une des revendications précédentes,
**caractérisé en ce que**
la source de rayonnement (2, 16) est configurée pour fournir le rayonnement d'émission sous forme de rayonnement laser de mesure pulsé (17), en particulier avec une durée d'impulsion unique inférieure à 600 picosecondes.

14. Distancemètre (1) selon l'une des revendications 3 ou 4,
**caractérisé en ce que**
• un troisième ensemble de zones partielles lisibles individuellement de l'agencement de SPAD peut être défini,
• l'unité de calcul (28) est configurée pour commander le récepteur (3) sur la base d'une séquence de mesure préprogrammée pour la détection du signal de réception (14, 14'),
• dans lequel la séquence de mesure définit la détection du signal de réception (14, 14') au moyen d'une suite temporelle définie de lectures de zones partielles individuelles du troisième ensemble de zones partielles.

15. Distancemètre (1) selon l'une des revendications précédentes,
**caractérisé en ce que**
le récepteur (3) présente plusieurs agencements de SPAD (18, 18A, 18B, 18'), lesdits plusieurs agencements de SPAD étant disposée de manière unidimensionnelle ou bidimensionnelle les uns par rapport aux autres, en particulier chaque agencement de SPAD présentant une électronique de commande et/ou une électronique d'évaluation séparée.
